# DEMANDE DE BREVET EUROPEEN

(11) **EP 4 752 454 A1**
(43) Date de publication de la demande: **03.06.2026**
(21) Numéro de dépôt: 25218700.0
(22) Date de dépôt: 26.11.2025
(51) Int. Cl.: F24S 25/30, F24S 25/61, H02S 20/24

(54) **SYSTEME DE FIXATION DE PANNEAU SOLAIRE SUR TOITURE, PROCEDES D'INSTALLATION ET DE FABRICATION AFFERENTS**

(30) Priorité: 29.11.2024 FR 2413214
(71) Demandeur: EPC Solaire, 69340 Francheville (FR)
(72) Inventeur: BOUSQUET, Jean-Paul, 69210 SAINT PIERRE LA PALUD (FR)
(74) Mandataire: Cabinet Didier Martin

(57) **Abrégé**

Système de fixation de panneau solaire sur toiture, procédés d'installation et de fabrication afférents.

L'invention concerne un système de fixation (1) de panneaux solaires sur une toiture incluant :
- un élément de retenue qui comprend :
o une portion inférieure destinée à être disposée sur ladite toiture,
o une première portion supérieure (8) ayant la forme d'un élément de plaque qui s'étend en saillie à partir de ladite portion inférieure,

- une bande souple (9) conçue pour coiffer ladite portion inférieure afin que ladite première portion supérieure (8) traverse ladite bande souple (9) pour faire saillie de cette dernière, ladite bande souple (9) étant conçue pour être attachée à ladite toiture,
- un élément de support (10) conçu pour recevoir ledit panneau solaire afin de le fixer à ladite toiture, ledit élément de support (10) coopérant mécaniquement avec ledit élément de retenue.

Le système de fixation de l'invention est destiné à la fixation à charge réduite de panneaux solaires

## Description

La présente invention concerne le domaine général de la rénovation énergétique, et plus précisément les problématiques spécifiques liées à la fixation et au maintien de panneaux solaires sur des surfaces d'accueil présentant des contraintes particulières, telles que les toitures.

La présente invention se rapporte plus particulièrement à un système de fixation d'au moins un panneau solaire sur une toiture.

La présente invention concerne en outre un procédé d'installation d'un système de fixation d'au moins un panneau solaire sur une toiture.

La présente invention se rapporte enfin également à un procédé de fabrication d'un système de fixation d'au moins un panneau solaire sur une toiture.

Les panneaux solaires photovoltaïques sont, de manière connue, montés à la surface d'une toiture à l'aide de moyens de fixation, lesquels permettent le maintien en position des panneaux quelles que soient les conditions météorologiques (vents violents, pluie, neige...). Ces panneaux solaires photovoltaïques classiques comprennent chacun un cadre relativement épais et une plaque entourée et supportée par ledit cadre. Les moyens de fixation connus adaptés pour ces panneaux comprennent quant à eux des brides de fixation pour fixer ledit cadre à la toiture.

Il existe par ailleurs une tendance générale à la mise en valeur et à la rénovation énergétique des toitures de diverses structures, dont des habitations, des bâtiments commerciaux, industriels et agricoles, des abris comme ceux protégeant certains parkings, des préaux, des hangars de stockage, etc. Lesdites toitures forment ainsi des surfaces considérables actuellement encore non exploitées ou sous exploitées. Ce principe de mise en valeur et de rénovation énergétique se traduit généralement par l'installation, sur ces toitures, de panneaux solaires photovoltaïques destinés à générer de l'électricité.

Cependant, un grand nombre de structures, notamment les structures industrielles, commerciales, agricoles, ou plus généralement à usage professionnel ou technique, est pourvu de toitures qui n'ont initialement pas été dimensionnées pour recevoir la « *surcharge photovoltaïque* » que constituent les panneaux solaires photovoltaïques classiques et leurs moyens de fixation connus, tels que mentionnés ci-avant. Cette surcharge photovoltaïque peut s'additionner à une surcharge naturelle constituée par l'accumulation de neige ou autre élément extérieur sur la toiture ou les panneaux solaires. Le poids de ces derniers est donc un enjeu majeur du marché de la rénovation énergétique des toitures existantes.

Des solutions intégrant des panneaux solaires photovoltaïques légers ont ainsi été mises en œuvre pour s'adapter aux toitures présentant une relative fragilité en termes de résistance mécanique à la charge. Ces panneaux photovoltaïques légers connus sont différents des panneaux solaires photovoltaïques classiques, et sont formés de modules en forme de feuilles souples, présentant une face supérieure pourvue de capteurs photovoltaïques, et une face inférieure opposée qui est rendue adhésive, et est conçue pour être collée directement sur la toiture.

Ces panneaux solaires légers connus et leur système de fixation par adhésion sur la toiture donnent globalement satisfaction en termes de réduction du poids global sur les toitures, mais présentent également certaines un certain nombre d'inconvénients.

En effet, il existe en premier lieu un problème de dilation différentielle entre la surface de la toiture et le panneau solaire léger connu. La surface de la toiture est souvent recouverte d'une membrane étanche, sur laquelle est donc collé plusieurs panneaux légers connus. Or, ceux-ci présentent un coefficient de dilation thermique différent de la membrane de la toiture, ce qui peut entraîner à terme un décollement des panneaux, une détérioration de ces derniers, ou encore une dégradation de la membrane, entraînant une perte d'étanchéité de cette dernière. Il existe par ailleurs un risque important d'infiltration d'eau entre les panneaux et la membrane, ce qui est particulièrement problématique notamment lors des périodes de gel/dégel successifs, l'eau infiltrée se transformant en glace qui fait gonfler les panneaux, les décolle, les détériore, ou encore dégrade la membrane. De plus, la moindre accumulation d'eau, de neige ou même de feuille morte sur la toiture diminue significativement le rendement des panneaux solaires légers connus, voire les rend inopérant. Par ailleurs, les panneaux solaires légers connus, du fait de leur système de fixation par adhésif contre la toiture, se refroidissent difficilement et montent rapidement à des températures importantes en période de forte chaleur et/ou de fort ensoleillement. La toiture accumule ainsi une chaleur importante qui perdure au sein des panneaux solaires connus, lesquels peuvent se dégrader à terme. Du fait de ce qui précède, mais également en raison tout simplement du vieillissement des matériaux, l'ensemble formé par les panneaux solaires légers connus et la surface de la toiture est sujet à la délamination. En effet, il s'agit d'un ensemble stratifié de plusieurs couches successives, avec de haut en bas les cellules photovoltaïques, la feuille souple du panneau sur lesquelles les cellules sont fixées (pouvant comprendre elle-même plusieurs couches), la couche adhésive, la membrane de la toiture, et éventuellement les éléments sous la membrane (isolant, etc.). Les panneaux solaires légers collés directement contre la toiture finissent par se cisailler longitudinalement, perpendiculairement à leur épaisseur, et sont ainsi considérablement dégradés, voire rendus inutilisables. Il est d'ailleurs particulièrement difficile d'entretenir ces panneaux solaires légers puisqu'ils sont collés à demeure, et leur enlèvement pour remplacement (en fin de vie ou en cas de dégradation prématurée) est souvent pénible, complexe et coûteux, l'opération d'enlèvement étant d'autant plus problématique qu'elle présente un fort risque de dégradation de la membrane de la toiture, et donc de perte d'étanchéité de celle-ci. L'installation elle-même des panneaux solaires légers connus n'est pas aussi simple qu'il n'y paraît, puisque la moindre erreur de positionnement des panneaux est très difficile à corriger, du fait de leur système de collage direct sur la toiture. Enfin, les panneaux solaires légers connus, puisqu'ils sont collés directement sur la toiture, impliquent que leurs câbles et boîtiers électriques sont plaqués contre ladite membrane d'étanchéité, ce qui pose bien évidemment des problèmes importants de fiabilité (courts-circuits, humidité, etc.) et de sécurité (risque d'incendie, surchauffe et fonte de matériaux, etc.) des installations. En résumé, les panneaux solaires légers connus et leur système de fixation par collage contre la toiture conviennent en ce qui concerne leur faible poids, mais entraînent également l'apparition de risques importants de dégradations, voire de sinistres, ainsi que des difficultés de pose, et d'entretien, et enfin une durabilité incertaine.

Les objets assignés à la présente invention visent en conséquence à remédier aux différents inconvénients énumérés précédemment et à proposer un système de fixation d'au moins un panneau solaire sur une toiture de manière simple, sûre et durable.

Un autre objet de l'invention vise à proposer un nouveau système de fixation d'au moins un panneau solaire sur une toiture, dont l'installation, en particulier sur une toiture préexistante, est à la fois rapide et facile à réaliser.

Un autre objet de l'invention vise à proposer un nouveau système de fixation d'au moins un panneau solaire sur une toiture particulièrement adapté à la rénovation ou à la valorisation énergétique d'une toiture, et notamment d'une toiture d'un bâtiment industriel, agricole ou commercial.

Un autre objet de l'invention vise à proposer un nouveau système de fixation d'au moins un panneau solaire sur une toiture, qui n'impose pas à la toiture une surcharge excédant sa résistance mécanique, et qui ne nécessite pas de modification particulière de la toiture, tout en mettant en œuvre un nombre limité d'éléments.

Un autre objet de l'invention vise à proposer un nouveau système de fixation d'au moins un panneau solaire sur une toiture dont la conception lui permet d'être particulièrement résistant, notamment vis-à-vis des conditions extérieures, telles qu'un vent violent, de la pluie ou de la neige.

Un autre objet de l'invention vise à proposer un nouveau système de fixation dont la conception lui permet de rattacher au moins un panneau solaire à une toiture de manière particulièrement rapide, pratique et robuste.

Un autre objet de l'invention vise à proposer un nouveau système de fixation d'au moins un panneau solaire sur une toiture présentant une importante fiabilité dans le temps, et qui ne nécessite qu'une maintenance minimale.

Un autre objet de l'invention vise à proposer un nouveau système de fixation dont la conception lui permet de monter au moins un panneau solaire sur une toiture, sans dégrader les propriétés d'isolation et d'étanchéité à l'eau de cette dernière.

Un autre objet de l'invention vise à proposer un nouveau système de fixation d'au moins un panneau solaire sur une toiture dont la fabrication peut être mise en œuvre facilement et à coût maîtrisé.

Un autre objet de l'invention vise à proposer un nouveau système de fixation dont la conception lui permet de minimiser le risque d'endommagement d'une toiture lorsqu'il est mis en œuvre pour monter au moins un panneau solaire sur la toiture.

Un autre objet de l'invention vise à proposer un nouveau système de fixation d'au moins un panneau solaire sur une toiture dont la conception lui permet de minimiser le risque d'affaissement, d'enfoncement ou de dégradation des éléments assurant la tenue mécanique de la toiture, notamment les éventuelles tôles nervurées ou ondulées de la toiture.

Un autre objet de l'invention vise à proposer un nouveau système de fixation d'au moins un panneau solaire sur une toiture dont la structure est simple et ne comprend qu'un nombre limité de pièces distinctes.

Un autre objet de l'invention vise à proposer un nouveau système de fixation d'au moins un panneau solaire sur une toiture dont la conception lui confère une excellente compacité, ainsi qu'un poids réduit.

Un autre objet de l'invention vise à proposer un nouveau système de fixation d'au moins un panneau solaire sur une toiture dont la conception lui confère une grande adaptabilité en termes d'installation sur des toitures variées (surfaces, inclinaison, résistance mécanique, type de toiture...), une importante flexibilité d'emploi en ce qui concerne les panneaux solaires mis en œuvre (taille, poids, type, etc.), et une grande souplesse d'utilisation (configurations d'installation, modularité), ainsi qu'un montage/démontage aisé notamment lors des opérations d'installation, d'entretien, de réparation ou de remplacement du ou des panneaux solaires attachés à la toiture grâce au système de fixation.

Un autre objet de l'invention vise à proposer un nouvel équipement pour la conversion du rayonnement solaire en énergie électrique ou thermique particulièrement robuste, léger, durable et facile à installer et à entretenir sur un bâtiment existant ou en construction, et ce à coûts maîtrisés.

Un autre objet de l'invention vise à proposer une nouvelle installation pour la fixation d'au moins un panneau solaire sur une toiture particulièrement robuste, légère, durable et facile à installer et à entretenir sur un bâtiment existant ou en construction, et ce à coûts maîtrisés.

Un autre objet de l'invention vise à proposer un nouvel assemblage de conversion du rayonnement solaire en énergie électrique ou thermique particulièrement robuste, léger, durable et facile à installer et à entretenir sur un bâtiment existant ou en construction, et ce à coûts maîtrisés.

Un autre objet de l'invention vise à proposer un nouveau procédé d'installation d'un système de fixation d'au moins un panneau solaire sur une toiture qui ne comprend qu'un nombre limité d'étapes simples, qui est ainsi particulièrement facile, rapide et peu coûteux à réaliser, et qui est en outre aisé à adapter à différentes configurations (toitures, panneaux solaires, etc.) tout en permettant de monter un ou plusieurs panneaux solaires sur la toiture de manière robuste et pratique sans la fragiliser ni la détériorer, y compris sans dégrader son étanchéité.

Un autre objet de l'invention vise à proposer un nouveau procédé de fabrication d'un système de fixation d'au moins un panneau solaire sur une toiture qui est particulièrement facile à industrialiser et à adapter à différentes configurations désirées, qui ne présente qu'un nombre limité d'étapes simples, faciles et aisées à réaliser impliquant par ailleurs des produits simples et peu coûteux, qui présente ainsi un coût de mise en œuvre optimisé, et qui permet de minimiser les risques d'erreur de fabrication.

Les objets assignés à l'invention sont atteints à l'aide d'un système de fixation d'au moins un panneau solaire sur une toiture, incluant au moins :
- un élément de retenue qui comprend au moins :
   o une portion inférieure destinée à être disposée sur ladite toiture,
   o une première portion supérieure ayant la forme d'un élément de plaque qui s'étend en saillie à partir de ladite portion inférieure entre un premier bord inférieur solidaire de ladite portion inférieure et un premier bord supérieur libre, ladite première portion supérieure étant pourvue d'une première conformation d'attache,
- une bande souple conçue pour coiffer ladite portion inférieure afin que ladite première portion supérieure traverse ladite bande souple pour faire saillie de cette dernière, ladite bande souple étant conçue pour être attachée à ladite toiture afin de solidariser ledit élément de retenue à ladite toiture,
- un élément de support conçu pour recevoir ledit panneau solaire afin de le fixer à ladite toiture, ledit élément de support comprenant une conformation d'attache complémentaire conçue pour coopérer mécaniquement avec la première conformation d'attache pour fixer ledit élément de support audit élément de retenue.

Les objets assignés à l'invention sont également atteints à l'aide d'un module de fixation d'au moins un panneau solaire sur une toiture incluant au moins :
- un élément de retenue qui comprend au moins :
   o une portion inférieure destinée à être disposée sur ladite toiture,
   o une première portion supérieure ayant la forme d'un élément de plaque qui s'étend en saillie à partir de ladite portion inférieure entre un premier bord inférieur solidaire de ladite portion inférieure et un premier bord supérieur libre, ladite première portion supérieure étant pourvue d'une première conformation d'attache,
- une bande présentant une face inférieure et une face supérieure, et qui est conçue pour être attachée à ladite toiture afin de solidariser ledit élément de retenue à ladite toiture, ladite bande souple coiffant ladite portion inférieure pour que ladite face inférieure s'étende contre ladite portion inférieure tandis que ladite première portion supérieure traverse ladite bande souple pour faire saillie de ladite face supérieure.

Les objets assignés à l'invention sont également atteints à l'aide d'un équipement pour la conversion du rayonnement solaire en énergie électrique ou thermique, incluant au moins :
- un panneau solaire, de préférence souple, et
- un système de fixation dudit panneau solaire sur une toiture tel que décrit ci-avant.

Il est aussi décrit une installation pour la fixation d'au moins un panneau solaire sur une toiture, incluant au moins :
- un élément de retenue qui comprend :
   o une portion inférieure disposée sur ladite toiture,
   o une première portion supérieure ayant la forme d'un élément de plaque qui s'étend en saillie de ladite portion inférieure entre un premier bord inférieur solidaire de ladite portion inférieure et un premier bord supérieur libre, ladite première portion supérieure étant pourvue d'une première conformation d'attache,
- une bande souple munie d'au moins un passage traversant, ladite bande souple coiffant ladite portion inférieure, ladite première portion supérieure traversant ainsi ledit passage traversant pour faire saillie de ladite bande souple, ladite bande souple étant attachée à la toiture, solidarisant ainsi ledit élément de retenue à la toiture,
- un élément de support conçu pour recevoir le panneau solaire afin de le fixer à la toiture, ledit élément de support comprenant une conformation d'attache complémentaire coopérant mécaniquement avec la première conformation d'attache et fixant ainsi ledit élément de support audit élément de retenue.

Les objets assignés à l'invention sont également atteints à l'aide d'un assemblage de conversion du rayonnement solaire en énergie électrique ou thermique incluant au moins un panneau solaire et un système de fixation tel que décrit ci-avant, ladite portion inférieure étant disposée sur ladite toiture, ladite bande souple coiffant ladite portion inférieure et ladite première portion supérieure traversant ledit passage traversant pour faire saillie de la bande souple, ladite bande souple étant attachée à ladite toiture, solidarisant ainsi ledit élément de retenue à ladite toiture, ledit panneau solaire étant fixé audit élément de support, ladite conformation d'attache complémentaire coopérant mécaniquement avec la première conformation d'attache pour fixer ledit élément de support audit élément de retenue.

Les objets assignés à l'invention sont également atteints à l'aide d'un procédé d'installation d'un système de fixation d'au moins un panneau solaire sur une toiture, incluant au moins :
- une étape d'agencement, lors de laquelle au moins un élément de retenue est disposé sur la toiture, ledit élément de retenue comprenant au moins :
   o une portion inférieure disposée sur ladite toiture,
   o une première portion supérieure ayant la forme d'un élément de plaque qui s'étend en saillie de ladite portion inférieure entre un premier bord inférieur solidaire de ladite portion inférieure et un premier bord supérieur libre, ladite première portion supérieure étant pourvue d'une première conformation d'attache,
- une étape d'assemblage, ayant lieu de préférence préalablement à ladite étape d'agencement, lors de laquelle une bande souple, vient coiffer ladite portion inférieure, ladite première portion supérieure traversant ainsi la bande souple afin de faire saillie de cette dernière,
- une étape primaire de fixation, lors de laquelle ladite bande souple est attachée à ladite toiture, solidarisant ainsi ledit élément de retenue à ladite toiture,
- une étape secondaire de fixation, lors de laquelle un élément de support, comprenant une conformation d'attache complémentaire, est fixé audit élément de retenue par coopération mécanique entre la première conformation d'attache et la conformation d'attache complémentaire, ledit élément de support étant conçu pour recevoir ledit panneau solaire afin de le fixer à ladite toiture.

Il est aussi décrit un procédé d'installation d'au moins un module de fixation d'au moins un panneau solaire sur une toiture comprenant au moins :
- une étape d'agencement, lors de laquelle ledit module de fixation est disposé sur la toiture, ledit module de fixation étant conforme à celui décrit ci-avant,
- une étape de fixation, lors de laquelle la bande souple dudit module de fixation est attachée à ladite toiture, par exemple par soudure, solidarisant ainsi ledit module de fixation à cette dernière.

Les objets assignés à l'invention sont également atteints à l'aide d'un procédé de fabrication d'un système de fixation d'au moins un panneau solaire sur une toiture, ledit procédé incluant au moins :
- une étape primaire de fabrication ou de fourniture d'au moins un élément de retenue qui comprend au moins :
   o une portion inférieure destinée à être disposée sur ladite toiture,
   o une première portion supérieure ayant la forme d'un élément de plaque qui s'étend en saillie à partir de ladite portion inférieure entre un premier bord inférieur solidaire de ladite portion inférieure et un premier bord supérieur libre, ladite première portion supérieure étant pourvue d'une première conformation d'attache,
- une étape secondaire de fabrication ou de fourniture d'une bande souple munie d'au moins un passage traversant, ladite bande souple étant conçue pour coiffer ladite portion inférieure afin que ladite première portion supérieure traverse ledit passage traversant pour faire saillie de la bande souple, ladite bande souple étant conçue pour être attachée à ladite toiture afin de solidariser ledit élément de retenue à ladite toiture,
- une étape tertiaire de fabrication ou de fourniture d'un élément de support conçu pour recevoir ledit panneau solaire afin de le fixer à ladite toiture ledit élément de support comprenant une conformation d'attache complémentaire conçue pour coopérer mécaniquement avec la première conformation d'attache pour fixer ledit élément de support audit élément de retenue.

D'autres objets et avantages de l'invention ressortiront plus en détail à la lecture de la description qui suit, et à l'aide des figures annexées fournies à titre purement explicatif et non limitatif, dans lesquelles :

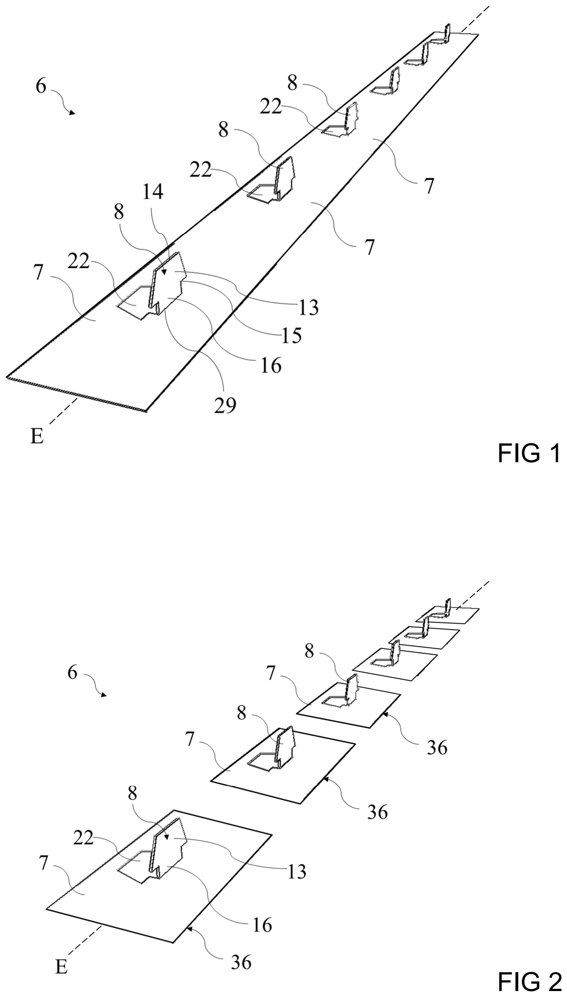

La figure 1 illustre, selon une vue schématique en perspective, un ensemble d'éléments de retenue disposés en ligne les uns à la suite des autres, selon un mode de réalisation particulier de l'invention, qui présente des portions inférieures qui sont reliées entre elles.
La figure 2 illustre, selon une vue schématique en perspective, un ensemble d'éléments de retenue disposés en ligne les uns à la suite des autres, selon un autre mode de réalisation particulier de l'invention, qui présente des portions inférieures qui ne sont pas reliées entre elles.

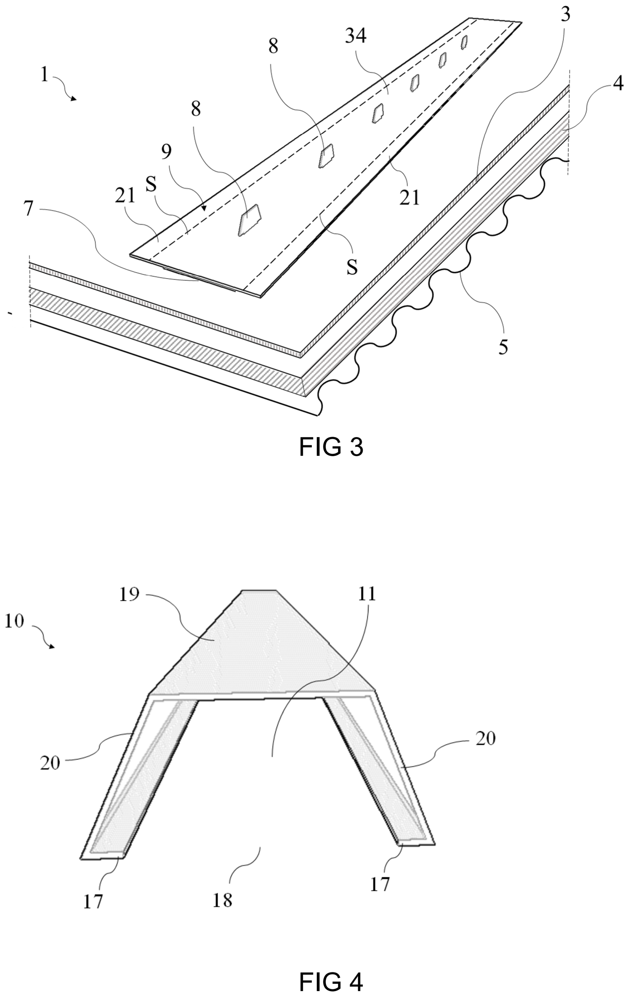

La figure 3 illustre, selon une vue schématique en perspective, un ensemble d'éléments de retenue disposés en ligne les uns à la suite des autres, qui peut être aussi bien celui de la figure 1 que celui de la figure 2, recouvert par une bande souple selon un mode de réalisation particulier de l'invention, où des premières portions supérieures des éléments de retenue traversent des passages traversants de la bande souple, l'ensemble d'éléments de retenue et la bande souple étant disposés sur une toiture comprenant de haut en bas une membrane d'étanchéité, une couche de matériau isolant et une tôle ondulée.
La figure 4 illustre, selon une vue schématique en perspective, un élément de support, selon un mode de réalisation particulier de l'invention.

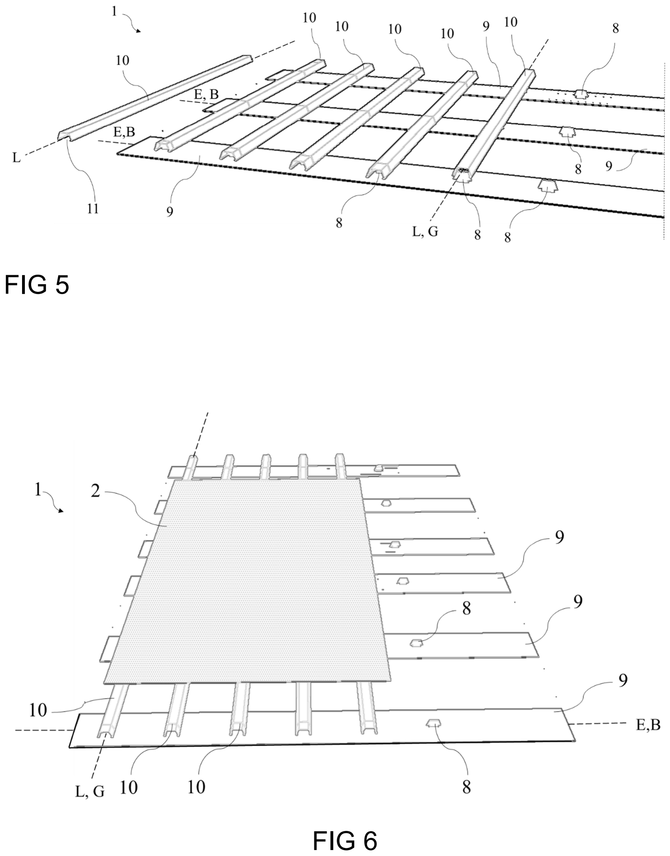

La figure 5 illustre, selon une vue schématique en perspective, une installation pour la fixation d'au moins un panneau solaire selon un mode de réalisation particulier de l'invention, où plusieurs éléments de support, tels que celui illustré à la figure 4, sont disposés perpendiculairement et en interaction avec des premières portions supérieures de plusieurs ensemble d'éléments de retenue chacun coiffé, comme celui de la figure 3, par une bande souple respective, la toiture n'étant pas représentée.
La figure 6 illustre, selon une vue schématique en perspective, une installation pour la fixation d'au moins un panneau solaire sensiblement similaire à celui de la figure 5 sur lequel a été installé un panneau solaire, formant ainsi un équipement pour la conversion du rayonnement solaire en énergie électrique ou thermique, selon un mode de réalisation particulier de l'invention.

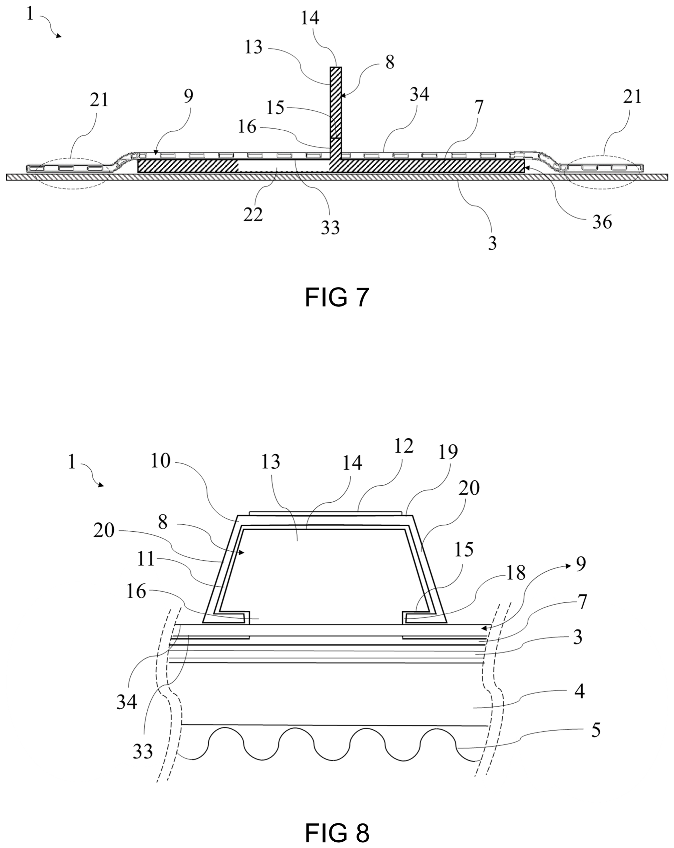

La figure 7 illustre, selon une vue schématique, une coupe sagittale d'une installation pour la fixation d'au moins un panneau solaire comprenant un élément de retenue, qui peut être l'un de ceux de la figure 3, recouvert par une bande souple comme à la figure 3, ladite bande souple étant soudée à une membrane d'étanchéité d'une toiture de part et d'autre de l'élément de retenue, selon un mode de réalisation particulier de l'invention.
La figure 8 illustre, selon une vue schématique de face, une installation pour la fixation d'au moins un panneau solaire comprenant un élément de retenue, qui peut être celui de la figure 7, et dont la portion inférieure est recouverte par une bande souple comme à la figure 7, ainsi qu'un élément de support, qui peut être celui de la figure 4 ou l'un de ceux des figure 5 et figure 6, en interaction avec la première portion supérieure de l'élément de retenue, un composé adhésif étant déposé sur l'élément de support, selon un mode de réalisation particulier de l'invention, le tout étant disposé sur une toiture qui peut être celle de la figure 3.

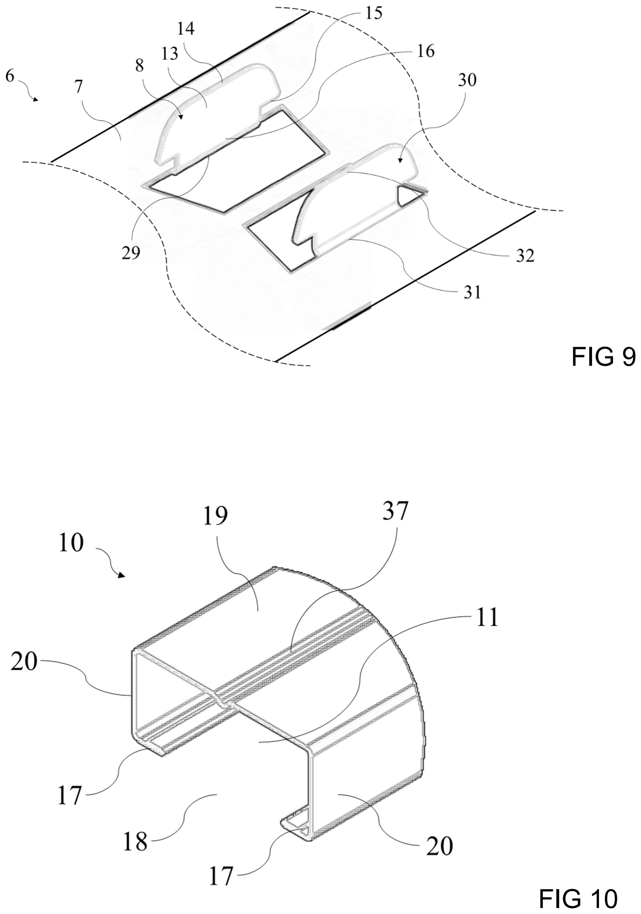

La figure 9 illustre, selon une vue schématique en perspective, un élément de retenue faisant partie d'un ensemble d'éléments de retenue, selon un mode de réalisation particulier de l'invention, où l'élément de retenue présente une première portion supérieure et une deuxième portion supérieure.
La figure 10 illustre, selon une vue schématique en perspective, une portion d'un élément de support, selon un mode de réalisation particulier de l'invention, où l'élément de support est configuré pour entrer en interaction avec l'élément de retenue de la La figure 9.

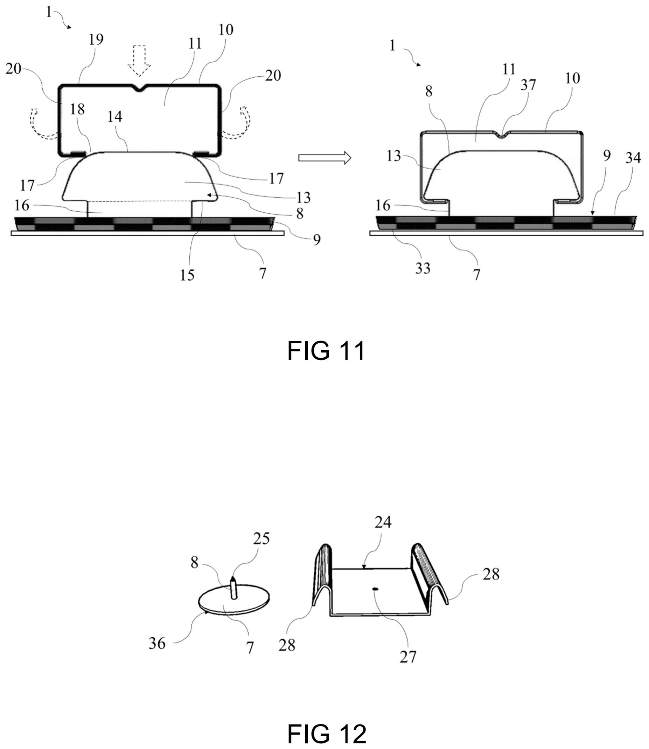

La figure 11 illustre, selon une vue schématique de face, une étape d'installation d'un système de fixation, selon un mode de réalisation particulier de l'invention, où l'élément de support de la figure 10 est déformé pour rentrer en interaction avec une première portion supérieure de l'élément de retenue de la figure 9, et où une bande souple coiffe l'élément de retenue et est traversée par la première portion supérieure.
La figure 12 illustre, selon une vue schématique en perspective, un élément de retenue ainsi qu'un élément intermédiaire, selon un autre mode de réalisation particulier de l'invention.

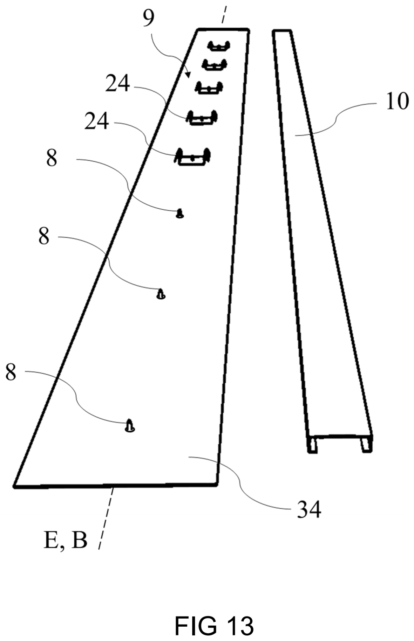

La figure 13 illustre, selon une vue schématique en perspective, un ensemble d'éléments de retenue disposés en ligne les uns à la suite des autres, tels que ceux de la figure 12, recouvert par une bande souple, où des premières portions supérieures des éléments de retenue traversent des passages traversants de la bande souple, et où des éléments intermédiaires sont fixés sur certains des éléments de retenue, ainsi qu'un élément de support non monté, disposé à côté.

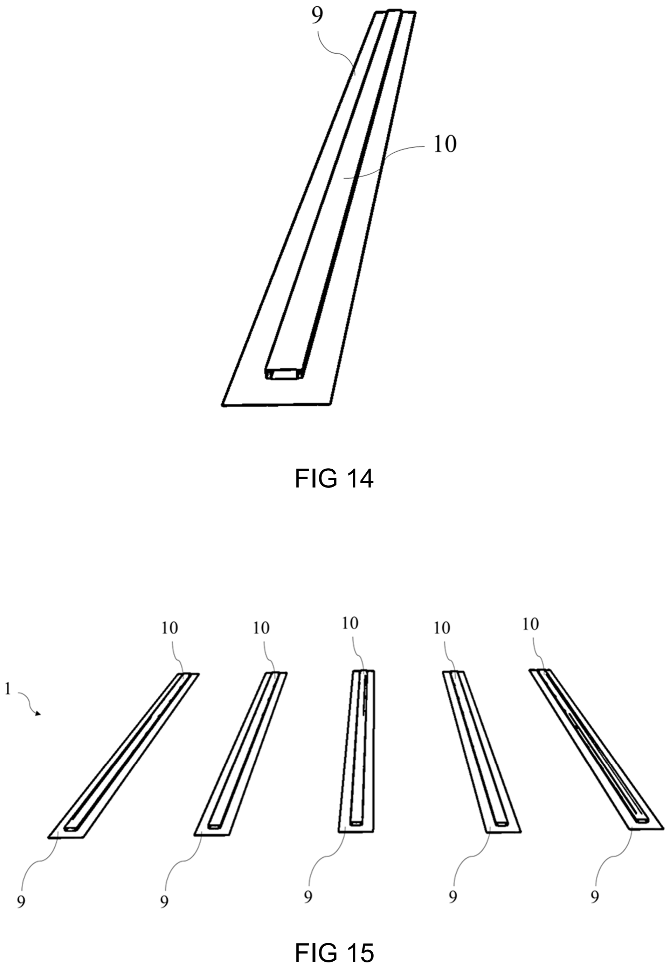

La figure 14 illustre, selon une vue schématique en perspective, les éléments de la figure 13 assemblés, constituant ainsi un module de fixation assemblé à un élément de support.
La figure 15 illustre, selon une vue schématique en perspective, plusieurs modules de fixation assemblés chacun à un élément de support, tels que ceux de la figure 14, placés de manière parallèle et formant une installation pour la fixation d'au moins un panneau solaire, la toiture n'étant pas représentée.

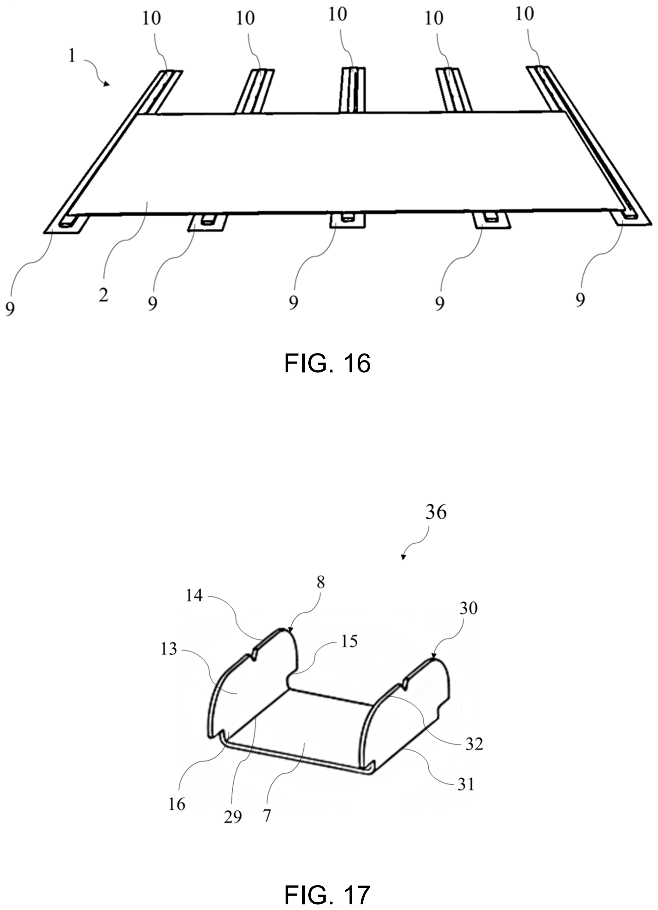

La figure 16 illustre, selon une vue schématique en perspective, une installation pour la fixation d'au moins un panneau solaire sensiblement similaire à celle de la figure 15, sur laquelle a été installé un panneau solaire, formant ainsi un équipement pour la conversion du rayonnement solaire en énergie électrique ou thermique, selon un mode de réalisation particulier de l'invention.
La figure 17 illustre, selon une vue schématique en perspective, un élément de retenue selon un autre mode de réalisation particulier de l'invention, l'élément de retenue présentant une première portion supérieure et une deuxième portion supérieure.

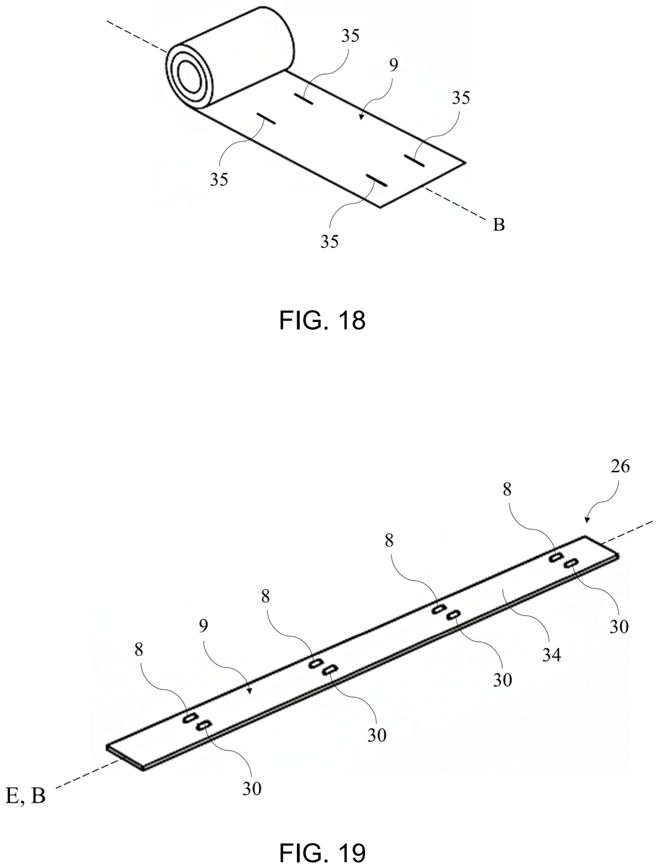

La figure 18 illustre, selon une vue schématique en perspective, une bande souple partiellement enroulée sur elle-même, selon un mode de réalisation particulier de l'invention, où la bande souple est configurée pour entrer en interaction avec un ensemble d'éléments de retenue tels que ceux de la figure 17.
La figure 19 illustre, selon une vue schématique en perspective, un module de fixation selon un mode de réalisation particulier de l'invention, qui met en œuvre en l'espèce plusieurs éléments de retenue tels que celui de la figure 17 et la bande souple de la fig 18.

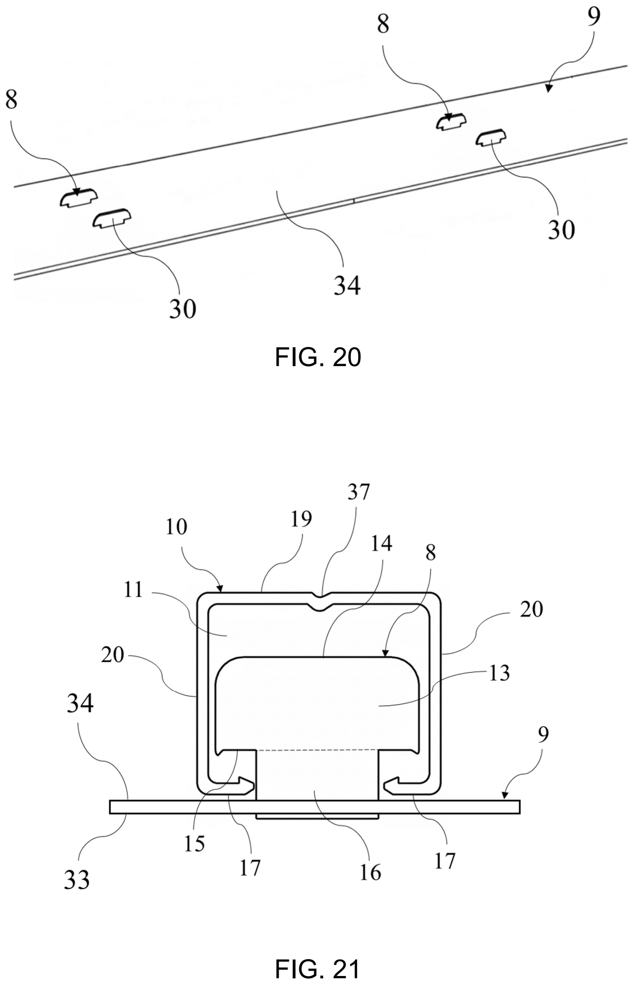

La figure 20 illustre, selon une vue agrandie, un détail de la figure 19.
La figure 21 illustre, selon une vue schématique de face, un élément de support coopérant avec un élément de retenue proche de ceux du module de fixation de la figure 19.

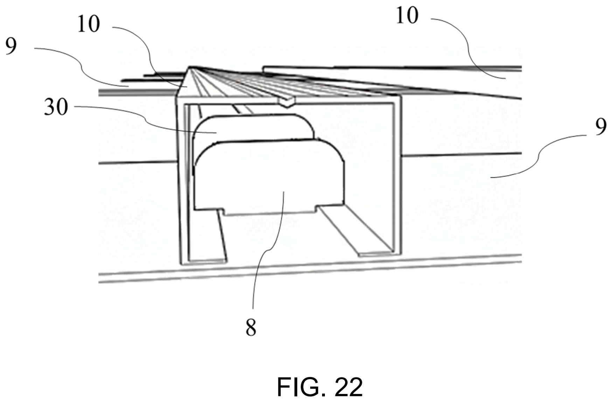

La figure 22 illustre, selon une vue schématique en perspective, une installation pour la fixation d'au moins un panneau solaire comprenant un élément de retenue, qui peut être celui de la figure 17 et dont la portion inférieure est recouverte par une bande souple comme celle de la figure 18, ainsi qu'un élément de support en coopération mécanique avec la première et la deuxième portion supérieure de l'élément de retenue, d'autres éléments de support et d'autres bandes souples étant aussi visibles.

L'invention concerne, selon un premier aspect, illustré aux figures, un système de fixation 1 d'au moins un panneau solaire 2 sur une toiture 3, 4, 5. En d'autres termes, l'ensemble support de fixation 1 est avantageusement destiné à attacher, c'est-à-dire à solidariser, de préférence de manière réversible, ledit panneau solaire 2 à ladite toiture 3, 4, 5, comme illustré aux figures. Bien évidemment, ledit système de fixation 1 peut également être conçu pour attacher plusieurs panneaux solaires à ladite toiture 3, 4, 5. Ledit panneau solaire 2 est préférentiellement un panneau photovoltaïque, c'est-à-dire qu'il est conçu pour produire de l'électricité à partir des rayonnements du soleil. Préférentiellement, la toiture 3, 4, 5 est principalement formée par un bâti de type toit, ladite toiture 3, 4, 5 formant en particulier la partie supérieure d'une structure ou d'un bâtiment, par exemple une habitation, un local commercial, agricole ou industriel (par exemple un centre commercial), un parking, un supermarché, un immeuble de bureaux, une station-service, etc. En particulier, ladite toiture 3, 4, 5 a pour fonction de protéger l'intérieur (ou plus généralement, le dessous) du bâtiment ou de la structure des intempéries (pluie, neige, etc.), de l'isoler de la température extérieure (notamment du froid), de lui assurer une protection anti-incendie, *etc.* En tout état de cause, ladite toiture 3, 4, 5 est avantageusement destinée à fournir une certaine protection à une structure située en-dessous, et notamment un édifice, ladite protection étant par exemple conçue pour protéger la structure des intempéries ou de la température extérieure. Préférentiellement ladite toiture 3, 4, 5 est sensiblement étanche au moins à l'eau. De préférence, ladite toiture 3, 4, 5 s'étend, localement, globalement et/ou au moins dans la zone où le panneau solaire 2 est destiné à être fixé à ladite toiture 3, 4, 5, de manière sensiblement plane ou courbe. De façon préférentielle, ladite toiture 3, 4, 5 s'étend soit à l'horizontale, soit à l'oblique. De manière connue, la toiture 3, 4, 5 comprend de préférence une membrane d'étanchéité 3 (en une ou plusieurs parties), de préférence souple, destinée à former la couche supérieure de ladite toiture 3, 4, 5 pour assurer l'étanchéité à l'eau de cette dernière. La toiture 3, 4, 5 comprend avantageusement, sous la membrane d'étanchéité 3, au moins une couche de matériau isolant 4. Avantageusement, la toiture 3, 4, 5 comprend une structure support 5, laquelle est formée par ou comprend, selon une variante particulière de toiture 3, 4, 5, une ou (généralement) plusieurs tôles nervurées ou ondulées 5, généralement en métal (acier en particulier), plus optionnellement en plastique. Les tôles nervurées ou ondulées 5 permettent avantageusement d'assurer l'essentiel, voire la totalité, de la tenue mécanique de la toiture 3, 4, 5. La couche de matériau isolant 4 est généralement placée sous la membrane d'étanchéité 3 et sur les tôles nervurées ou ondulées 5, lesquelles reçoivent donc non seulement le poids de la couche de matériau isolant 4 et de la membrane d'étanchéité 3, mais également celui du panneau solaire 2 et du système de fixation 1, lequel permet donc de fixer ledit panneau solaire 2 à ladite toiture 3, 4, 5. Il est donc important d'éviter un affaissement desdites tôles nervurées ou ondulées 5, ou plus généralement de la structure support 5. Il est également important de ne pas dégrader la membrane d'étanchéité 3 lors de l'installation du système de fixation 1 sur la toiture 3, 4, 5. Le panneau solaire 2 comprend avantageusement une plaque, généralement sensiblement parallélépipède, formant capteur solaire. En revanche, le panneau solaire 2 est avantageusement dépourvu, comme on le verra, du cadre rigide qui entoure habituellement les panneaux solaires classiques, bien que le système de fixation 1 de l'invention puisse également fonctionner avec de tels panneaux solaires.

Selon l'invention, le système de fixation 1 inclut au moins un élément de retenue 36, c'est-à-dire un élément dont une fonctionnalité principale est de contribuer à empêcher l'éloignement d'un élément de support 10, tel que décrit ci-après, auquel il est relié. De préférence, ledit élément de retenue 36 est réalisé en métal, notamment en aluminium, en acier, ou encore en un alliage. Avantageusement, ledit élément de retenue 36 est issue d'une étape de découpe et/ou de pliage d'un flan métallique, afin d'être particulièrement facile et rapide à obtenir ainsi que bon marché. Alternativement, ledit élément de retenue 36 pourrait être réalisé en polymère. De préférence, ledit élément de retenue 36 présente une tenue mécanique propre, c'est-à-dire qu'il n'est pas flasque afin notamment de faciliter la retenue de l'élément de support 10 comme on le verra. Toutefois, ledit élément de retenue 36 (et en particulier la portion inférieure 7 décrite ci-après) peut cependant présenter une certaine flexibilité, et peut par exemple être suffisamment flexible pour suivre les contours d'une toiture 3, 4, 5 courbée.

Selon l'invention, ledit élément de retenue 36 comprend au moins une portion inférieure 7 destinée à être disposée (en d'autres termes, mise en place) sur ladite toiture 3, 4, 5. Ladite portion inférieure 7 est avantageusement destinée à être plaquée, c'est-à-dire à être appliquée étroitement, contre ladite toiture 3, 4, 5 et en particulier contre la membrane d'étanchéité 3. Très préférentiellement, ladite portion inférieure 7, ainsi que l'élément de retenue 36, ne sont pas destinés à être disposés sur ladite toiture 3, 4, 5 d'une manière susceptible d'endommager la toiture 3, 4, 5, notamment en perforant la membrane d'étanchéité 3, afin de préserver les fonctionnalités de la toiture 3, 4, 5, et en particulier son étanchéité. Ainsi, ledit système de fixation 1 est avantageusement conçu pour que ledit élément de retenue 36 ne nécessite pas de fixation directe à la toiture 3, 4, 5, par exemple au moyen d'un élément de fixation tel qu'une vis ou un clou. Ledit élément de retenue 36 est destiné à être fixé à ladite toiture 3, 4, 5 au moyen d'une bande souple 9 telle que celle décrite ci-après, comme on le verra.

De préférence, ladite portion inférieure 7 est sensiblement plate, c'est-à-dire qu'elle n'est sensiblement ni concave, ni convexe et ne présente sensiblement ni creux, ni reliefs. Elle peut ainsi être disposée de manière stable sur ladite toiture 3, 4, 5, tout en maximisant sa surface de contact avec ladite toiture 3, 4, 5, ce qui permet de mieux répartir les charges qui sont destinées à être appliquées audit élément de retenue 36 (notamment ledit élément de support 10 décrit ci-après et ledit panneau solaire 2).

Selon l'invention, ledit élément de retenue 36 comprend aussi au moins une première portion supérieure 8 qui s'étend en saillie à partir de ladite portion inférieure 7 entre un premier bord inférieur 29 solidaire de ladite portion inférieure 7 et un premier bord supérieur libre 14. En d'autres termes, ledit élément de retenue 36 comprend une première portion supérieure 8 fixée à la portion inférieure 7 par un premier bord inférieur 29, ladite première portion supérieure 8 s'élevant de ladite portion inférieure 7 en la dépassant et ladite première portion supérieure 8 s'étendant jusqu'à un premier bord supérieur 14 qualifié de libre, c'est-à-dire qui n'est pas relié à une quelconque autre partie dudit élément de retenue 36. De préférence, la première portion supérieure 8 et la portion inférieure 7 sont avantageusement reliées l'une à l'autre à demeure et font plus avantageusement parties d'une même pièce (métallique par exemple). De préférence, ladite première portion supérieure 8 ne relie pas plusieurs portions inférieures 7 entre elles.

De préférence, ladite première portion supérieure 8 s'étend en saillie à partir de la portion inférieure 7 en formant un angle saillant (avantageusement vers le haut) par rapport à ladite portion inférieure 7. Par exemple, la portion première supérieure 8 forme un angle saillant compris entre 45° et 135°, de préférence compris entre 60° et 120°, plus préférentiellement compris entre 80° et 100°, par exemple sensiblement 90°, avec la portion inférieure 7, comme illustré notamment aux figures 1, 2, 7, 9, 12, 17.

Selon l'invention, ladite première portion supérieure 8 a la forme d'un élément de plaque, c'est-à-dire qu'elle est sensiblement plate et présente une faible épaisseur, comparativement à sa longueur et à sa largeur. En d'autres termes, ladite première portion supérieure 8 est sensiblement plate, et présente ainsi avantageusement une hauteur et une largeur qui sont chacune significativement plus grandes que son épaisseur. Autrement dit, ladite première portion supérieure 8 présente avantageusement la forme d'élément de plaque, avec une épaisseur relativement réduite comparée à ses autres dimensions (hauteur et largeur en particulier). Ladite première portion supérieure 8 étant ainsi notamment particulièrement légère.

Selon l'invention, ladite première portion supérieure 8 est aussi pourvue d'une première conformation d'attache, c'est-à-dire d'une forme ou d'une disposition particulière destinée à attacher ladite portion supérieure 8 à un autre élément, et notamment à un élément de support 10 comme on le verra. Plus de détails sur ladite première conformation d'attache seront donnés ci-après.

Selon un mode de réalisation particulier illustré notamment aux figures 1, 2, 7 à 9, 11, 12 et 17, ladite première portion supérieure 8 est venue de matière avec la portion inférieure 7, c'est-à-dire que ladite première portion supérieure 8 et ladite portion inférieure 7 forment une pièce d'un seul bloc, fabriquée en même temps avec la même matière.

De préférence, ledit système de fixation 1 comprend un ensemble 6 d'éléments de retenue 36 destinés à être disposés en lignes les uns à la suite des autres, afin notamment de mieux répartir les charges supportées par ledit système de fixation 1 sur ladite toiture. En d'autres termes, ledit ensemble 6 d'éléments de retenue 36 comprend avantageusement une pluralité d'éléments de retenue 36, lesquels sont donc de préférence conçus pour être placés sur ladite toiture 3, 4, 5 les uns à la suite des autres en ligne, c'est-à-dire selon une direction d'ensemble E (comme illustrés par exemple aux figures 1, 2, 13 et 19). Ledit ensemble 6 d'éléments de retenue 36 s'étend donc avantageusement selon la direction d'ensemble E. De préférence, les éléments de retenue 36 de l'ensemble 6 d'éléments de retenue 36 sont similaires entre eux. Lesdites portions inférieures 7 sont en particulier conçues pour être disposées les unes à la suite des autres en ligne, préférentiellement selon ladite direction d'ensemble E.

Selon un premier mode de réalisation particulier, lesdites portions inférieures 7 sont distinctes les unes des autres, et avantageusement conçues pour être disposées à distance les unes des autres, de préférence en ligne les unes à la suite des autres, comme illustré par exemple à la figure 2. Bien évidemment, lesdites portions inférieures 7 distinctes les unes des autres s'étendent alors de préférence selon ladite direction d'ensemble E. Ce mode de réalisation est avantageux en termes de flexibilité, la longueur de l'ensemble 6 d'éléments de retenue 36 pouvant être adaptée à loisir et aussi en termes de poids dudit ensemble 6 d'éléments de retenue 36. Lesdites premières portions supérieures 8 ne sont pas, dans ce dernier mode de réalisation, reliées entre elles (du moins pas directement, au sein de l'ensemble 6 d'éléments de retenue 36).

Selon un deuxième mode de réalisation particulier, lesdites portions inférieures 7 sont reliées entre elles, et forment ainsi avantageusement un élément de plaque sensiblement allongé, comme illustré à la figure 1. Ce mode de réalisation est particulièrement pratique du fait de sa simplicité de fabrication, d'installation et de la bonne surface de support qu'il implique, l'élément de plaque sensiblement allongé étant avantageusement conçu pour être plaqué de tout son long contre ladite toiture 3, 4, 5. L'élément de plaque sensiblement allongé présente de préférence une tenue mécanique propre, c'est-à-dire qu'il n'est pas flasque. Il peut cependant présenter une certaine flexibilité, et peut par exemple être suffisamment flexible pour suivre les contours d'une toiture 3, 4, 5 courbée. Bien entendu, ledit élément de plaque sensiblement allongé s'étend de préférence selon ladite direction d'ensemble E. De manière préférentielle, ledit élément de plaque sensiblement allongé embarque ou comprend alors les premières portions supérieures 8 du même ensemble 6 d'éléments de retenue 36. Lesdites premières portions supérieures 8 sont, dans ce dernier mode de réalisation, reliées entre elles via lesdites portions inférieures 7, c'est-à-dire via ledit élément de plaque sensiblement allongé. Un mode de réalisation mixte est également possible, avec des portions inférieures 7 reliées entre elles, et formant un élément de plaque allongé, et d'autres portions inférieures 7 non reliées entre elles, toutes avantageusement étant disposées sur la toiture 3, 4, 5 selon ladite direction d'ensemble E.

Selon l'invention, le système de fixation 1 comprend au moins une bande souple 9 conçue pour coiffer ladite portion inférieure 7 afin que ladite première portion supérieure 8 traverse ladite bande souple 9 pour faire saillie de cette dernière. Ledit système de fixation 1 comprend ainsi au moins une bande 9 qui est qualifiée de souple, c'est-à-dire une bande qui peut être courbée sans casser ou s'abimer. Ladite bande souple 9 est conçue pour être disposée au-dessus de la portion inférieure 7, tandis que la première portion supérieure 8 traverse cette bande souple 9 de manière à s'en dégager et à s'élever au-delà de celle-ci (comme illustré par exemple aux figures 3, 5 à 8, 11, 13 et 19 à 22). De préférence, ladite bande souple 9 présente une face inférieure 33 et une face supérieure 34, ladite bande souple 9 étant conçue pour coiffer ladite portion inférieure 7 pour que ladite face inférieure 33 s'étende contre ladite portion inférieure 7 tandis que ladite première portion supérieure 8 traverse ladite bande souple 9 pour faire saillie de ladite face supérieure 34 (comme illustré par exemple aux figures 7, 8, 11 et 21.

Ladite bande souple 9 est conçue pour être attachée à ladite toiture 3, 4, 5 afin de solidariser ledit élément de retenue 36 à ladite toiture 3, 4, 5. La bande souple 9 constitue donc avantageusement une bande de raccordement destinée à solidariser le système de fixation 1 à ladite toiture 3, 4, 5, et plus précisément à la membrane d'étanchéité 3 de cette dernière. Cette configuration permet notamment de préserver l'étanchéité de la toiture 3, 4, 5. De préférence, la bande souple 9 est conçue pour être soudée à ladite toiture 3, 4, 5, de préférence de part et d'autre dudit élément de retenue 36, de préférence le long de ce dernier, par exemple selon au moins deux directions de soudure S (ou encore deux lignes de soudure S). Lesdites deux directions (ou lignes) de soudure S sont de manière avantageuse sensiblement parallèles l'une à l'autre (comme illustré par exemple à la figure 3). De préférence, ledit élément de retenue 36 est dépourvu de revêtement autorisant une soudure directe dudit élément de retenue 36 avec la bande souple 9 ou la membrane d'étanchéité 3. Ledit élément de retenue 36 est avantageusement configuré pour être fixé à la toiture 3, 4, 5 uniquement car il est disposé entre la membrane d'étanchéité 3 et la bande souple 9, cette dernière étant soudée à ladite membrane d'étanchéité 3 le long dudit élément de retenue 36. En d'autres termes, ledit élément de retenue 36 est alors « *pris en sandwich »* entre ladite bande souple 9 et ladite membrane d'étanchéité 3, ce qui le maintien contre la toiture 3, 4, 5.

De manière préférentielle, ladite bande souple 9 est principalement formée d'un matériau choisi parmi le groupe comprenant le bitume, les élastomères dont les caoutchoucs éthylène-propylène-diène monomère (EPDM), le polychlorure de vinyle (PVC), et les polyoléfines dont les polyoléfines thermoplastiques (TPO) et les polyoléfines flexibles (FPO). La bande souple 9 est de préférence formée d'un matériau sensiblement souple, et peut ainsi s'adapter à différents types de toiture 3, 4, 5. De façon avantageuse, la bande souple 9 est destinée à être disposée sur la membrane d'étanchéité 3 de de la toiture 3, 4, 5 et à être attachée à cette dernière, notamment par thermo-soudage, ce qui est d'autant plus facile que ladite bande souple 9 est plus avantageusement encore formée d'un matériau similaire ou identique à celui formant ladite membrane d'étanchéité 3. Une telle configuration permet notamment d'augmenter la résistance à l'arrachement de la bande souple 9, et donc du système de fixation 1 et du panneau solaire 2, vis-à-vis de la bande souple 9, et donc de la toiture 3, 4 ,5.

Ladite bande souple 9 est avantageusement conçue pour recouvrir ladite portion inférieure 7 de manière à déborder de part et d'autre de l'élément de retenue 36. En d'autres termes, ladite bande souple 9 et ledit élément de retenue sont avantageusement dimensionnés pour que ladite bande souple 9 puisse coiffer ladite portion inférieure 7, et pour que ladite bande souple 9 s'étende de part et d'autre de ladite portion inférieure 7 jusqu'à déborder latéralement dudit élément de retenue 36 pour venir en contact de la toiture 3, 4, 5, et plus précisément de la membrane d'étanchéité 3 de cette dernière (comme illustré par exemple aux figures 7 et 21), à laquelle ladite bande souple 9 peut avantageusement être soudée, préférentiellement selon lesdites directions (ou lignes) de soudure S. D'un point de vue extérieur, une fois que la bande souple 9 recouvre ladite portion inférieure 7 plaquée contre la toiture 3, 4, 5, seule ladite première portion supérieure 8 dépasse de la bande souple (comme illustré par exemple aux figures 3, 5, 6, 13, 19, 20 et 22).

La bande souple 9 présente par exemple une forme générale carrée ou rectangulaire. Avantageusement, la bande souple 9 est découpée à partir de rouleaux de 15 à 30 m de bande souple. De préférence, ladite bande souple 9 présente une épaisseur comprise entre 1 et 14 mm, plus préférentiellement comprise entre 1,2 et 8 mm, encore plus préférentiellement comprise entre 1,8 et 5 mm. Lorsque ladite bande souple 9 présente un forme générale rectangulaire, elle présente avantageusement une longueur supérieure à 1 m et optionnellement inférieure à 5 m, et une largeur comprise entre 5 cm et 80 cm, de préférence comprise entre 10 cm et 40 cm, par exemple environ égale à 20 cm (+/- 5 cm).

Lorsqu'un ensemble 6 d'éléments de retenue 36 est présent, ladite bande souple 9 est de préférence en outre conçue pour coiffer la portion inférieure 7 de chacun des éléments de retenue 36 afin que la première portion supérieure 8 de chacun des éléments de retenue 36 traverse ladite bande souple 9 pour faire saillie de cette dernière. Ladite bande souple 9 est alors conçue pour être attachée à ladite toiture 3, 4, 5 afin de solidariser ledit ensemble 6 d'éléments de retenue 36 à ladite toiture 3, 4, 5. Dans ce cas, ladite bande souple 9 est préférentiellement sensiblement allongée, et s'étend par exemple selon une direction de bande B, laquelle est avantageusement destinée à être sensiblement parallèle ou sensiblement confondue avec ladite direction d'ensemble E (comme illustré par exemple aux figures 5, 6, 13 et 19). Lesdites deux directions (ou lignes) de soudure S sont de manière avantageuse sensiblement confondues ou sensiblement parallèles avec ladite direction d'ensemble E et/ou avec ladite direction de bande B.

Selon un mode de réalisation particulier, ladite première portion supérieure 8 dudit élément de retenue 36 est pourvue d'une portion pointue et/ou coupante 25 (comme illustré par exemple à la figure 12) pour perforer la bande souple 9 et réaliser ainsi un passage traversant 35 de la première portion supérieure 8 à travers ladite bande souple 9. Cette portion pointue et/ou coupante 25 peut avantageusement prendre la forme d'une pointe. La bande souple 9 peut, alternativement, être originellement pré-perforée ou bien intacte. Dans les deux cas, la portion pointue et/ou coupante 25 est destinée à être appliquée, manuellement ou mécaniquement, avec assez de force sur la bande souple 9 pour que la portion pointue et/ou coupante 25 perce la bande souple 9 de part en part. Le trou ainsi obtenu permet donc à la première portion supérieure 8 de faire saillie à travers de la bande souple 9 et donc d'être accessible lorsque la bande souple 9 coiffe la portion inférieure 7.

Selon un autre mode de réalisation, la bande souple 9 est munie d'au moins un passage traversant 35 (comme illustré par exemple à la figure 18), ladite première portion supérieure 8 étant conçue pour traverser ledit passage traversant 35. Avantageusement, ledit passage traversant 35 présente la forme d'une fente. Ledit passage traversant 35 présente par exemple la forme d'un segment réalisé à travers la bande souple 9, par exemple par coupure de celle-ci. Ainsi ledit passage traversant 35 permet de recevoir de manière plus ajustée la première portion supérieure 8, notamment lorsqu'elle est en forme d'éléments de plaque. Ledit passage traversant 35 ne présentent donc de préférence pas la forme d'une figure géométrique (à deux dimensions) notamment du type polygone, cercle ou ovale. De préférence, les dimensions dudit passage traversant 35 sont sensiblement conjuguées à celles de ladite première portion supérieure 8. Cette dernière est en effet avantageusement conçue pour être insérée au sein dudit passage traversant 35, afin de traverser la bande souple 9 dans son épaisseur. Lorsqu'un ensemble 6 d'éléments de retenue 36 est présent, la bande souple 9 est avantageusement munie d'une pluralité de passages traversants 35 répartis le long de ladite bande souple 9, chaque portion supérieure 8 étant conçue pour traverser l'un respectif desdits passages traversants 35. De façon avantageuse, les passages traversants 35 sont ménagés à travers l'épaisseur de la bande souple 9 en ligne les uns à la suite des autres, de préférence selon une direction sensiblement parallèle ou sensiblement confondue avec direction de bande B.

Le système de fixation 1, selon l'invention, comprend en outre au moins un élément de support 10 conçu pour recevoir ledit panneau solaire 2 afin de le fixer à ladite toiture 3, 4, 5. Ledit élément de support 10 est ainsi avantageusement conçu pour supporter au moins une partie du poids du panneau solaire 2, directement ou indirectement. Le panneau solaire 2 est de toute façon placé sur l'élément de support 10, éventuellement avec un élément de liaison entre le panneau solaire 2 et l'élément de support 10 et reliant ces derniers l'un à l'autre. Selon un mode de réalisation particulier de l'invention, illustré notamment à la figure 8, le système de fixation 1 comprend en outre un composé adhésif 12 destiné à être déposé sur l'élément de support 10. Ledit composé adhésif 12 est, selon un mode de réalisation préférentiel, conçu pour coller directement ledit panneau solaire 2 audit élément de support 10. De préférence, ledit composé adhésif 12 est un adhésif double-face. Ceci est particulièrement avantageux lorsque ledit panneau solaire 2 est un panneau solaire souple, léger, et/ou sans cadre rigide, comme on le verra après, car cela permet de limiter le poids du système de fixation 1 de manière significative. De manière générale, le panneau solaire 2 comprend avantageusement un côté supérieur, pourvu de capteurs solaires et destinée à être tournée vers le haut, et un côté inférieur, opposé au côté supérieur (et donc caché) et destiné à être tourné vers le bas (et vers le système de fixation 1). Lorsque le système de fixation 1 comprend le composé adhésif 12, celui-ci peut être collé directement sur le côté inférieur, sans avoir forcément besoin d'être collé à un cadre du panneau solaire 2, si celui-ci en dispose (ce qui n'est pas toujours le cas lorsque le panneau solaire 2 est un panneau souple). Plus généralement encore, le système de fixation 1 est de préférence conçu pour pouvoir être relié directement au côté inférieur du panneau solaire 2 (et pas nécessairement à son cadre).

Selon l'invention, ledit élément de support 10 comprend une conformation d'attache complémentaire conçue pour coopérer mécaniquement avec la première conformation d'attache pour fixer ledit élément de support 10 audit élément de retenue 36 et en particulier à ladite première portion supérieure 8 portant ladite première conformation d'attache. En d'autres termes, l'élément de support 10 est conçu pour être relié, de préférence de manière réversible, à ladite première portion supérieure 8 par coopération mécanique entre ladite première conformation d'attache et ladite conformation d'attache complémentaire, afin de solidariser ledit élément de support 10 à ladite toiture 3, 4, 5, en considérant en particulier que la bande souple 9 coiffe ladite portion inférieure 7, que ladite première portion supérieure 8 traverse la bande souple 9, et que celle-ci est attachée, par exemple soudée, à la toiture 3, 4, 5 et plus précisément à la membrane d'étanchéité 3 de cette dernière. Avantageusement ladite première portion supérieure 8 est conçue pour être insérée de manière ajustée au sein dudit élément de support 10 pour retenir ce dernier sur la toiture 3, 4, 5, par exemple par liaison glissière ou par déformation (de préférence élastique) dudit élément de support 10.

Ledit élément de support 10 est de préférence sensiblement allongé, et s'étend par exemple selon une direction d'extension longitudinale L. Il présente par exemple une forme générale de profilé, en particulier un profilé à section transversale en forme générale de C ou de crochet, avec une cavité interne 11 tournée vers le bas, comme illustré notamment aux figures 4, 5, 8, 10, 11, 21 et 22. L'élément de support 10 comprend par exemple une paroi supérieure 19, et deux parois latérales 20 reliées à ladite paroi supérieure 19 et opposées l'une à l'autre. Lesdites deux parois latérales 20 sont donc située de part et d'autre de la paroi supérieure 19. Lesdites deux parois latérales 20 s'étendent avantageusement, à partir de la paroi supérieure 19, vers le bas, comme illustré notamment aux figures 8, 10, 11 et 21. Bien entendu, l'élément de support 10 est de préférence creux. L'élément de support 10 délimite donc avantageusement une cavité interne 11. Lorsque l'élément de support 10 est allongé, la cavité interne 11 est préférentiellement sensiblement allongée également, c'est-à-dire qu'elle constitue un espace s'étendant longitudinalement. Ladite cavité interne 11 s'étend donc de préférence le long de la direction d'extension longitudinale L. De manière générale, la cavité interne 11 est avantageusement destinée à accueillir au moins ladite première portion supérieure 8 (ou plus précisément, au moins une partie de celle-ci). Ladite cavité interne 11 présente de préférence des dimensions (internes) sensiblement ajustées, conjuguées et/ou complémentaires avec les dimensions (externes) de la première portion supérieure 8, et plus précisément aux contours de l'épaisseur de cette dernière.

La figure 5 illustre un mode de réalisation particulier du système de fixation 1, avec différentes portions supérieures 8 et différents éléments de support 10, où l'une ou plusieurs desdites premières portions supérieures 8 sont en cours d'insertion, par liaison glissière, de préférence selon une direction de glissière G sensiblement parallèle ou sensiblement confondue avec ladite direction d'extension longitudinale L, dans l'un ou plusieurs desdits éléments de support 10. La figure 11 illustre un autre mode de réalisation particulier du système de fixation 1, où l'élément de support 10 est conçu pour se déformer afin d'accueillir en son sein la première portion supérieure 8 (ou plus précisément, une portion au moins de celle-ci). Dans ce dernier mode, l'élément de support 10 est placé au-dessus de la première portion supérieure 8, puis une pression est exercée sur l'élément de support 10 pour déformer ses parois latérales 20, par contact avec la première portion supérieure 8, afin d'accueillir cette dernière à l'intérieur de l'élément de support 10, les parois latérales 20 se refermant ensuite, par déformation élastique, sur ladite première portion supérieure 8. L'élément de support 10 est alors clipsé sur ladite première portion supérieure 8.

Avantageusement, ladite paroi supérieure 19 comprend une rainure 37, de préférence centrale, qui s'étend le long dudit élément de support 10 de préférence selon ladite direction d'extension longitudinale L (comme illustré par exemple aux figures 10, 11 et 21). Cette rainure peut par exemple permettre de facilement appliquer sur ledit élément de support 10 une ligne de colle chaude pour par exemple coller ledit panneau solaire 2 sur ledit élément de support 10. Ledit élément de retenue 36 peut aussi présenter une rainure (comme illustré par exemple à la figure 17) de sorte à avoir une forme conjuguée avec celle dudit élément de support 10.

Selon un mode de réalisation particulier illustré notamment aux figures 9 et 17 à 22, ledit élément de retenue 36 comprend au moins une deuxième portion supérieure 30. En d'autres termes, ledit élément de retenue 36 comprend alors au moins deux portions supérieures 8, 30 faisant saillie de la même portion inférieure 7. De préférence, chacune des caractéristiques décrites ci-avant et ci-après pour ladite première portion supérieure 8 s'applique de la même manière à ladite deuxième portion supérieure 30. Ainsi, lesdites première et deuxième portions supérieures 8, 30 sont de préférence de conception identique et utilisées de manière identique.

Notamment, ladite deuxième portion supérieure 30 a de préférence la forme d'un élément de plaque qui s'étend en saillie à partir de ladite portion inférieure 7 entre un deuxième bord inférieur 31 solidaire de ladite portion inférieure 7 et un deuxième bord supérieur libre 32. De préférence, ladite deuxième portion supérieure 30 est venue de matière avec la portion inférieure 7. De préférence, ladite deuxième portion supérieure 30 forme un angle saillant compris entre 45° et 135° avec ladite portion inférieure 7. Lesdites première et deuxième portions supérieures 8, 30 sont de préférence sensiblement parallèles l'une à l'autre (comme illustré par exemple aux figures 9 et 17) . De préférence, ladite deuxième portion supérieure 30 est pourvue d'une deuxième conformation d'attache. Ladite bande souple 9 est avantageusement conçue pour coiffer ladite portion inférieure 7 afin que ladite deuxième portion supérieure 30 traverse ladite bande souple 9 pour faire saillie de cette dernière. De préférence, ladite conformation d'attache complémentaire dudit élément de support 10 est conçue pour coopérer mécaniquement en outre avec ladite deuxième conformation d'attache pour fixer ledit élément de support 10 audit élément de retenue 36.

Bien évidemment, un même élément de support 10 peut être attaché à une première portion supérieure 8 et à une deuxième portion supérieure 30 d'un même élément de retenue 36 (comme illustré par exemple à la figure 22), ou à une pluralité de premières portions supérieures 8 appartenant à plusieurs éléments de retenue 36 distincts (comme illustré notamment aux figures 5 et 6), ou à une pluralité de première et deuxième portions supérieures 8, 30 appartenant à une plusieurs d'éléments de retenus 36 distincts, une combinaison des trois variantes étant bien évidemment possible.

Selon un mode de réalisation avantageux, ledit ensemble 6 d'éléments de retenue 36 inclut, de préférence uniquement, des éléments de retenue 36 comprenant au moins une deuxième portion supérieure 30. De préférence, les premières portions supérieures 8 sont alors destinées à être toutes disposées dans un même premier plan, tandis que les deuxièmes portions supérieures 30 sont destinées à être toutes disposées dans un même deuxième plan, de préférence sensiblement parallèle audit premier plan (comme illustré par exemple aux figures 19 et 20). Ladite bande souple 9 est conçue pour coiffer la portion inférieure 7 de chacun desdits éléments de retenue 36 afin que la première portion supérieure 8 et la deuxième portion supérieure 30 de chacun des éléments de retenue 36 traversent ladite bande souple 9 pour faire saillie de cette dernière. De préférence, ladite bande souple 9 comprend pour ce faire une pluralité de passages traversants 35 de préférence répartis le long de ladite bande souple 9 selon deux lignes, de préférence sensiblement parallèles à ladite direction de bande B (comme illustré par exemple à la figure 18). Chaque première portion supérieure 8 est alors destinée à traverser un passage traversant 35 appartenant à une des deux lignes de passages traversants 35 et chaque deuxième portion supérieure 30 est destinée à traverser un passage traversant 35 appartenant à l'autre ligne de passages traversants 35 (comme illustré par exemple aux figures 19 et 20).

Que les éléments de retenue 36 présentent ou non une deuxième portion supérieure 30, selon un mode de réalisation particulièrement avantageux, le système de fixation 1 comprend de préférence une pluralité d'ensembles d'éléments de retenue qui inclut ledit ensemble 6 d'éléments de retenue 36 . Lesdits ensembles 6 d'éléments de retenue 36 peuvent être conçus pour être disposés sensiblement parallèlement les uns aux autres sur ladite toiture 3, 4, 5. De préférence, ledit système de fixation 1 comprend alors en outre une pluralité de bandes souples identiques les unes aux autres et qui inclut ladite bande souple 9, chaque bande souple 9 étant conçue pour coiffer la portion inférieure 7 de chacun desdits éléments de retenue 36 d'un ensemble 6 d'éléments de retenue 36 de sorte que ladite première portion supérieure 8 de chacun desdits éléments de retenue 36 dudit ensemble 6 d'éléments de retenue 36 traverse ladite bande souple 9 pour faire saillie de cette dernière.

Selon un autre mode de réalisation particulier, mis en œuvre indépendamment ou de préférence en combinaison avec le précédent, le système de fixation 1 comprend une pluralité d'éléments de support identiques les uns aux autres et qui inclut ledit élément de support 10, la conformation d'attache complémentaire de chacun desdits éléments de support 10 coopérant mécaniquement avec au moins la première conformation d'attache de l'un desdits éléments de retenue 36 pour fixer chaque élément de support 10 à l'un desdits éléments de retenue 36. Lesdits éléments de support 10 peuvent être conçus pour être disposés sensiblement parallèlement les uns aux autres sur ladite toiture 3, 4, 5.

Selon une variante de réalisation (de préférence en combinaison avec ce qui précède, bien que pas obligatoirement), ledit élément de support 10 est conçu pour être disposé sensiblement perpendiculairement audit ensemble 6 d'éléments de retenue 36. Par exemple, lorsque ledit élément de support 10 est sensiblement allongé, une première portion supérieure 8 (et éventuellement une deuxième portion supérieure 30) est conçue pour coopérer mécaniquement avec ledit élément de support 10 pour que ce dernier soit disposé sensiblement perpendiculairement à un ensemble 6 d'éléments de retenue 36. Ceci dépend en substance de la forme de la cavité interne 11 de l'élément de support 10 et de la forme correspondante (ajustée, complémentaire et/ou conjuguée) de la première portion supérieure 8, celle-ci venant donc s'insérer dans ladite cavité interne 11. L'avantage d'une telle configuration, où les éléments de support 10 sont sensiblement perpendiculaires aux ensembles 6 d'éléments de retenue 36, est une meilleure répartition du poids du panneau solaire 2, une meilleure sécurité (diminution du risque d'arrachement) et une plus grande facilité d'installation. En effet, chaque élément de support 10 est alors avantageusement conçu pour être relié à plusieurs ensemble 6 d'éléments de retenue 36 ce qui permet de mieux étaler et répartir le poids représenté par le panneau solaire 2 supporté par ledit élément de support 10. Ainsi, de manière plus générale, il est préférable que l'élément de support 10 soit conçu pour être relié à plusieurs ensembles 6 d'éléments de retenue 36 (par exemple sensiblement perpendiculairement comme mentionné précédemment, mais pas obligatoirement, une configuration oblique étant aussi envisageable entre l'élément de support 10 et chaque ensemble 6 d'élément de retenue 36).

Selon une autre variante de réalisation illustrée aux figures 14, 15 et 16, ledit élément de support 10 est conçu pour être disposé sensiblement parallèlement audit ensemble 6 d'éléments de retenue 36. L'avantage d'une telle configuration, où les éléments de support 10 sont sensiblement parallèles aux ensembles 6 d'éléments de retenue 36, est le faible encombrement de l'assemblage d'un élément de support 10, de la bande souple 9 et d'un ensemble 6 d'éléments de retenue 36. Ce faible encombrement permet d'envisager un pré-assemblage de cette sous-partie au sol ou en usine.

Selon une variante de réalisation particulière, le passage traversant 35 de ladite bande souple 9 est moins grand que la largeur maximale de ladite première portion supérieure 8. En d'autres termes, la plus grande dimension du passage traversant 35 (typiquement sa longueur) est avantageusement inférieure à la largeur de la première portion supérieure 8 (ladite largeur étant différente de l'épaisseur et de la hauteur de la première portion supérieure 8). La bande souple 9 est donc préférentiellement conçue pour être traversée (dans son épaisseur) par ladite première portion supérieure 8 par déformation (élastique) dudit passage traversant 35, ladite bande souple 9 présentant avantageusement une certaine élasticité (c'est-à-dire qu'elle peut être, dans une certaine mesure, déformée sous l'application d'une force, puis retrouver sa forme initiale).

Selon une variante avantageuse, de préférence en combinaison avec celle qui précède, ladite première portion supérieure 8 comprend elle-même une tête 13 et un pied 16 relié à ladite tête 13, ladite tête 13 débordant latéralement (de préférence de chaque côté) dudit pied 16 pour former un rebord de butée 15 contribuant à former ladite première conformation d'attache. En d'autres termes, la tête 13 présente avantageusement une portion de débordement (ledit rebord de butée 15) qui s'étend sur le (et donc au-dessus et au droit de la bande souple 9), sans être au droit du pied 16. De préférence, ladite tête 13 s'évase de haut en bas, entre ledit premier bord supérieur libre 14 qui présente une première section transversale et ledit rebord de butée 15 qui présente une deuxième section transversale, ladite deuxième section transversale étant donc plus grande que ladite première section transversale ; dit autrement, la tête 13 présente avantageusement au niveau du premier bord supérieur libre 14 une largeur plus petite que celle qu'elle présente au niveau du rebord de butée 15. De préférence, ledit pied 16 est en-dessous de ladite tête 13 et reliée à cette dernière via ledit rebord de butée 15. De préférence, ledit pied 16 présente une troisième section transversale parallèle à ladite deuxième section transversale et sensiblement inférieure à cette dernière.

A titre d'exemple, si la première portion supérieure 8 fait saillie verticalement de ladite portion inférieure 7, lesdites première, deuxième et troisième sections transversales sont avantageusement horizontales. Exprimé d'une autre manière, de haut en bas, la première portion supérieure 8 présente une largeur (ou une section transversale) qui s'agrandit progressivement au niveau de sa tête 13 entre le premier bord supérieur libre 14 (avec la première section transversale) et le rebord de butée 15 (avec la deuxième section transversale), puis qui se rétrécit, de préférence brutalement, en-dessous du rebord de butée 15 dans ledit pied 16. La troisième section transversale (c'est-à-dire la section transversale dudit pied 16) peut être, comme illustré au figures, sensiblement constante de haut en bas. La tête 13 présente par exemple une forme générale de trapézoïde, qui peut être à coins en arêtes (comme aux figures 1 à 8) ou arrondis (comme aux figures 9 à 11, 17 et 20). Ledit trapézoïde présente une petite base au niveau du premier bord supérieur libre 14 et une grande base au niveau du rebord de butée 15. La tête 13 peut également présenter d'autres formes générales comme par exemple une forme générale rectangulaire (comme aux figures 21 et 22). Ledit rebord de butée 15 peut être sensiblement plan (comme aux figures 1 à 3, 5, 6, 8, 9, 11, 17, 20 et 22) ou partiellement courbe (comme à la figure 21). Le pied 16 présente par exemple une forme rectangulaire, comme illustré notamment aux figures 1, 2, 5, 8, 9, 11 et 17 avec un grand côté de taille inférieure à celle de ladite grande base. Le pied 16 est, de manière générale, avantageusement relié avec la portion inférieure 7 par ledit premier bord inférieur 29.

Comme décrit précédemment, ledit élément de support 10 délimite avantageusement la cavité interne 11. De manière préférentielle, ledit élément de support 10 comprend par ailleurs des parois inférieures 17 qui délimitent une lumière 18 permettant à la cavité interne 11 de déboucher vers le bas à l'extérieur de l'élément de support 10. Il y a de préférence deux parois inférieures 17 opposées l'une à l'autre, de part et d'autre de ladite lumière 18. De préférence, lesdites parois inférieures 17 sont chacune reliée ou font partie respectivement desdites deux parois latérales 20. Lesdits parois inférieures 17 constituent au moins en partie ladite conformation d'attache complémentaire. Lesdites parois inférieures 17 peuvent être sensiblement plates (comme illustré par exemple aux figures 4, 8, 10, 11 et 22) ou bien présenter par exemple une excroissance (comme illustré à la figure 21) afin de sécuriser d'avantage ledit élément de support 10 audit élément de retenue 36. De façon avantageuse, lorsque l'élément de support 10 est allongé, ladite lumière 18 forme une ouverture longitudinale débouchant sur l'extérieur, s'étendant le long dudit élément de support 10 de préférence selon une direction sensiblement parallèle ou sensiblement confondue avec ladite direction d'extension longitudinale L. Ladite cavité interne 11 est ainsi avantageusement conçue pour accueillir ladite tête 13, ladite lumière 18 étant conçue pour être traversée par ledit pied 16 (ou en d'autres termes pour accueillir au moins une portion de celui-ci) comme illustré notamment aux figures 8, 11 et 21. Lorsque le système de fixation 1 est installé sur la toiture 3, 4, 5, lesdites parois inférieures 17 sont préférentiellement conçues pour être disposées au droit et en-dessous du rebord de butée 15 de la tête 13 afin d'entrer en butée avec ladite tête 13, par exemple lorsque l'élément de support 10 subit une force l'entraînant vers le haut. Ceci permet d'éviter l'arrachement vertical du panneau solaire 2 relativement à la toiture 3, 4, 5, puisque ledit élément de retenue 36 est relié à ladite toiture 3, 4, 5 grâce à ladite bande souple 9, tandis que ledit panneau solaire 2 est attaché audit élément de support 10. La liaison entre la tête 13 et le pied 16, au niveau du rebord de butée 15, n'est pas forcément toujours visible, mais est identifiée à la figure 11 à gauche et à la figure 21 par une ligne virtuelle en pointillés.

De manière particulièrement avantageuse, ledit passage traversant 35 de ladite bande souple 9 est destiné à accueillir ledit pied 16 (ou au moins une portion de celui-ci) comme illustré notamment aux figures 8, 11 et 21. Ainsi, ledit passage traversant 35 présente de préférence une longueur inférieure à la largeur de la tête 13 au niveau de son rebord de butée 15 (la longueur du passage traversant 35 et la largeur de tête 13 étant mesurés dans un même plan ou des plans parallèles). Chaque passage traversant 35 présente donc de préférence une dimension maximale, prise dans un plan parallèle à celui de la deuxième section transversale, qui est inférieure à la dimension maximale de la deuxième section transversale. De cette manière, lorsque la tête 13 est insérée dans ledit passage traversant 35, celui-ci est avantageusement conçu pour se déformer, de préférence de manière élastique, entre le premier bord supérieur libre 14 et le rebord de butée 15, avant de retrouver essentiellement sa forme initiale en-dessous du rebord de butée 15, au niveau du pied 16. Ceci permet donc en quelques sortes *« d'emprisonner »* la bande souple 9 à l'aide de la première portion supérieure 8, puisqu'une partie du rebord de butée 15 de ladite tête 13 se retrouve au-dessus et au droit de la bande souple 9, comme illustré aux figures 3, 5, 6, 8, 11, 20 et 21 afin d'entrer en butée avec cette dernière, par exemple si ladite bande souple 9 se gonflait ou se soulevait en son milieu. Cela permet également de faciliter la solidarisation de l'élément de support 10 avec la première portion supérieure 8, la bande souple 9 ne venant pas se coincer dans la cavité interne 11 de l'élément de support 10 grâce à la configuration tête 13 / pied 16 mentionnée ci-avant. Cela permet aussi, comme nous le verrons par la suite, de constituer un module de fixation 26, composé de l'assemblage dudit élément de retenue 36 (ou de préférence dudit ensemble 6 d'éléments de retenue 36) et de ladite bande souple 9, se tenant et pouvant notamment être transporté sans risque de voir un élément de retenue 36 se détacher de ladite bande souple 9.

Selon un mode de réalisation particulier, illustré à la figure 12, chacune des premières portions supérieures 8 est en forme de tige et une portion pointue et/ou coupante 25 est située au sommet de cette tige au niveau dudit premier bord supérieur libre 14. Avantageusement la portion inférieure 7 est plate, par exemple en forme de disque et la première portion supérieure 8 fait sailli en son centre, comme c'est le cas sur un clou.

Selon un mode de réalisation particulier, illustré aux figures 12 à 14, le système de fixation 1 comprend un élément intermédiaire 24 destiné à faire le lien entre l'élément de support 10 et ladite première portion supérieure 8. Cet élément intermédiaire 24 est par exemple une pièce métallique ou plastique. Cet élément intermédiaire 24 inclut un premier moyen d'attache 27 conçu pour coopérer avec ladite première portion supérieure 8, afin d'attacher l'élément intermédiaire 24 à la première portion supérieure 8. Avantageusement, le premier moyen d'attache 27 comprend un orifice conçu pour recevoir la première portion supérieure 8, l'orifice et la première portion supérieure 8 étant de préférence configurés pour former une liaison permanente par leur emboîtement mutuel, sans recours à des éléments de fixation additionnels. L'orifice peut, par exemple, être un simple trou à paroi lisse, être usiné de manière légèrement conique ou avec des cannelures internes, ou bien encore taraudé. L'orifice peut avantageusement être situé sensiblement au centre de l'élément intermédiaire 24 et constituer, par exemple, à lui seul le premier moyen d'attache 27, comme illustré sur la figure 12. La première portion supérieure 8 peut être, par exemple, une tige sensiblement cylindrique d'un diamètre un peu supérieur au diamètre de l'orifice (comme illustré sur la figure 12), ou bien être une tige conique, une tige cannelée, une tige filetée ou bien une goupille élastique. Avantageusement, la première portion supérieure 8 est conçue pour traverser l'orifice de part en part. Avantageusement, la première portion supérieure 8 et l'élément intermédiaire 24 sont conçus pour être fixés ensemble de manière irréversible, par exemple par déformation plastique de l'une des deux pièces ou par utilisation d'un insert autobloquant. Les éléments intermédiaires 24 incluent aussi, un deuxième moyen d'attache 28 conçu pour coopérer avec l'élément de support 10, afin d'attacher l'élément intermédiaire 24 à l'élément de support 10. Cette dernière fixation peut se faire par liaison glissière, permettant ainsi le coulissement de l'élément de support 10 vis-à-vis des éléments de retenue 36, pour permettre par exemple une mise en place facilitée du support 10 sur les éléments de retenue 36. Cette fixation peut aussi se faire en force, par déformation (de préférence élastique) des éléments intermédiaires 24 ou de l'élément de support 10. Cette dernière façon de procéder à comme avantage de solidariser l'élément de support à l'élément intermédiaire 24 sans utilisation d'autres moyens de fixation. Selon un mode de réalisation de l'invention avantageux, le deuxième moyen d'attache 28 comprend une excroissance latérale destinée à venir s'accrocher à l'élément de support 10. De manière préférentielle, le deuxième moyen d'attache 28 comprend aussi une deuxième excroissance latérale symétrique à la première, située à distance de cette dernière, comme illustré sur la figure 12 où le moyen d'attache comprend deux excroissances latérales symétriques en forme d'ailette.

Dans ce mode de réalisation, l'élément de support 10 peut avantageusement délimiter une cavité interne 11, comme décrite précédemment. L'élément de support 10 comprend alors des parois inférieures 17 qui délimitent une lumière 18 permettant à la cavité interne 11 de déboucher vers le bas à l'extérieur de l'élément de support 10. Dans ce mode de réalisation, la cavité interne 11 est conçue pour accueillir le deuxième moyen d'attache 28. Le deuxième moyen d'attache 28 est conçu pour entrer en contact avec l'intérieur de la cavité interne 11 de l'élément de support 10. Avantageusement, le deuxième moyen d'attache 28 est déformable élastiquement et vient s'appuyer dans la cavité interne 11 de l'élément de support 10 lorsqu'il est déformé créant ainsi une liaison suffisante avec ce dernier pour supporter un panneau solaire 2 sans se démonter mais qui peut éventuellement autoriser un glissement relatif. Les parois inférieures 17 sont conçues pour être disposées au droit et en-dessous de l'au moins une excroissance latérale afin d'entrer en butée avec cette dernière par exemple lorsque l'élément de support 10 subit une force l'entraînant vers le haut.

L'invention concerne, selon un deuxième aspect, illustré à la figure 19, un module de fixation 26 d'au moins un panneau solaire 2 sur une toiture 3, 4, 5 incluant au moins :
- un élément de retenue 36 qui comprend au moins :
   o une portion inférieure 7 destinée à être disposée sur ladite toiture 3, 4, 5,
   o une première portion supérieure 8 ayant la forme d'un élément de plaque qui s'étend en saillie à partir de ladite portion inférieure 7 entre un premier bord inférieur 29 solidaire de ladite portion inférieure 7 et un premier bord supérieur libre 14, ladite première portion supérieure 8 étant pourvue d'une première conformation d'attache,
- une bande souple 9 présentant une face inférieure 33 et une face supérieure 34, et qui est conçue pour être attachée à ladite toiture 3, 4, 5 afin de solidariser ledit élément de retenue 36 à ladite toiture 3, 4, 5, ladite bande souple 9 coiffant ladite portion inférieure 7 pour que ladite face inférieure 33 s'étende contre ladite portion inférieure 7 tandis que ladite première portion supérieure 8 traverse ladite bande souple 9 pour faire saillie de ladite face supérieure 34.

Ainsi, le module de fixation 26 est en substance formé par l'assemblage dudit élément de retenue 36 et de ladite bande souple 9 tels que décrits ci-avant et ci-après. Bien entendu, les éléments communs aux différents aspects de l'invention, mentionnés ci-avant et ci-après, qui présentent des dénominations identiques, sont préférentiellement les mêmes, et pas des éléments distincts ou différents.

Le module de fixation 26 ainsi conçu peut être installé sur une toiture 3, 4, 5 très facilement, avec peu de main-d'œuvre et de manipulation, les éléments le composant étant déjà assemblés.

Avantageusement, mais pas obligatoirement, ledit module de fixation 26 inclut ledit ensemble 6 d'éléments de retenue 36 décrit ci-avant et ci-après et non uniquement un élément de retenue 36.

L'invention concerne, selon un troisième aspect, un équipement pour la conversion du rayonnement solaire en énergie électrique ou thermique, comprenant au moins :
- un panneau solaire 2, et
- un système de fixation 1 dudit panneau solaire 2 sur une toiture 3, 4, 5, conforme à celui décrit ci-avant et ci-après, ou éventuellement, un module de fixation 26 dudit panneau solaire 2 sur une toiture 3, 4, 5 et un élément de support 10 conformes à ceux décrits ci-avant et ci-après .

Ainsi, l'équipement pour la conversion du rayonnement solaire comprend en substance :
- soit d'une part ledit panneau solaire 2 et d'autre part ledit système de fixation 1 adapté pour fixer ledit panneau solaire 2 sur ladite toiture 3, 4, 5, tels que décrits ci-avant et ci-après ;
- soit d'une part ledit panneau solaire 2 et d'autre part ledit module de fixation 26 et ledit élément de support 10 adaptés pour fixer ledit panneau solaire 2 sur ladite toiture 3, 4, 5, tels que décrits ci-avant et ci-après.

Avantageusement, ledit panneau solaire 2 est un panneau solaire 2 souple, lequel est donc préférentiellement dépourvu de cadre non-flexible (voire dépourvu de cadre en général). Ceci permet d'alléger la charge supportée par la toiture 3, 4, 5, laquelle charge comprend donc l'équipement pour la conversion susmentionné. En effet, les panneaux solaires classiques à cadre rigide sont généralement bien plus lourds, et sont généralement conçus pour être fixés via leur cadre rigide à la toiture 3, 4, 5, laquelle ne peut souvent pas supporter une telle charge additionnelle (panneaux solaires classiques lourds à cadre rigide, brides de fixation connues, neige, etc.). Si le panneau solaire 2 souple tel que mentionné ci-avant est pourvu d'un cadre, ledit cadre présente avantageusement une certaine flexibilité, et préférentiellement une flexibilité comparable ou équivalente à celle de sa plaque formant capteur solaire.

Il est aussi décrit une installation pour la fixation d'au moins un panneau solaire 2 sur une toiture 3, 4, 5 (comme illustré par exemple aux figures 5 et 15), incluant au moins :
- un élément de retenue 36 comprenant :
   o une portion inférieure 7 disposée sur ladite toiture 3, 4, 5,
   o une première portion supérieure 8 ayant la forme d'un élément de plaque qui s'étend en saillie à partir de ladite portion inférieure 7 entre un premier bord inférieur 29 solidaire de ladite portion inférieure 7 et un premier bord supérieur libre 14, ladite première portion supérieure 8 étant pourvue d'une première conformation d'attache,
- une bande souple 9 munie d'au moins un passage traversant 35, ladite bande souple 9 coiffant ladite portion inférieure 7, ladite première portion supérieure 8 traversant ainsi ledit passage traversant 35 pour faire saillie de la bande souple 9, ladite bande souple 9 étant attachée à ladite toiture 3, 4, 5, solidarisant ainsi ledit élément de retenue 36 à cette dernière,
- un élément de support 10 conçu pour recevoir ledit panneau solaire 2 afin de le fixer à ladite toiture 3, 4, 5, ledit élément de support 10 comprenant une conformation d'attache complémentaire coopérant mécaniquement avec la première conformation d'attache et fixant ainsi ledit élément de support 10 audit élément de retenue 36.

Ainsi, l'installation pour la fixation comprend en substance le système de fixation 1 tel décrit ci-avant (et ci-après), mais installé sur une toiture 3, 4, 5 (et donc attaché à cette dernière).

Avantageusement, mais pas obligatoirement, ladite installation pour la fixation d'au moins un panneau solaire 2 sur une toiture 3, 4, 5 inclut ledit ensemble 6 d'éléments de retenue 36 décrit ci-avant et ci-après et non uniquement un élément de retenue 36.

L'invention concerne, selon un quatrième aspect, un assemblage de conversion du rayonnement solaire en énergie électrique ou thermique, incluant au moins :
- un panneau solaire 2, et
- un système de fixation 1 conforme à celui décrit ci-avant et ci-après, ladite portion inférieure 7 étant disposée sur ladite toiture 3, 4, 5, ladite bande souple 9 coiffant ladite portion inférieure 7 et ladite première portion supérieure 8 traversant ledit passage traversant 35 pour faire saillie de la bande souple 9, ladite bande souple 9 étant attachée à ladite toiture 3, 4, 5, solidarisant ainsi ledit élément de retenue 36 à ladite toiture 3, 4, 5, ledit panneau solaire 2 étant fixé audit élément de support 10, ladite conformation d'attache complémentaire coopérant mécaniquement avec la première conformation d'attache pour fixer ledit élément de support 10 audit élément de retenue 36, ou éventuellement une installation pour la fixation dudit panneau solaire 2 sur une toiture 3, 4, 5, conforme à celle décrite ci-avant et ci-après, où l'élément de support 10 reçoit ledit panneau solaire 2 et le fixe à ladite toiture 3, 4, 5.

Ainsi, l'assemblage pour la conversion du rayonnement solaire comprend en substance d'une part ledit panneau solaire 2 et d'autre part le système de fixation 1 tel que décrit ci-avant (et ci-après), mais installé sur une toiture 3, 4, 5 (et donc attaché à cette dernière) ou ladite installation pour la fixation 1, laquelle rattache ledit panneau solaire 2 à ladite toiture 3, 4, 5.

Avantageusement, mais pas obligatoirement, ledit système de fixation 1 dudit assemblage de conversion du rayonnement solaire en énergie électrique ou thermique inclut ledit ensemble 6 d'éléments de retenue 36 décrit ci-avant et ci-après et non uniquement un élément de retenue 36.

Encore plus avantageusement, ledit système de fixation 1 dudit assemblage de conversion du rayonnement solaire en énergie électrique ou thermique comprend :
- une pluralité d'ensembles d'éléments de retenue identiques les uns aux autres et qui inclut ledit ensemble 6 d'éléments de retenue 36 décrit ci-avant et ci-après, lesdits ensembles 6 d'éléments de retenue 36 étant disposés parallèlement les uns aux autres, les éléments de retenue 36 ainsi agencés formant donc visuellement des lignes d'éléments de retenus 36 (constituée donc chacune par au moins un ensemble 6 d'éléments de retenue 36) sensiblement parallèles les unes aux autres,
- une pluralité de bandes souples identiques les unes aux autres et qui inclut ladite bande souple 9, chaque bande souple 9 coiffant la portion inférieure 7 de chacun desdits éléments de retenue 36 d'un ensemble 6 d'éléments de retenue 36, ladite première portion supérieure 8 de chacun desdits éléments de retenue 36 dudit ensemble 6 d'éléments de retenue 36 traversant ladite bande souple 9 pour faire saillie de cette dernière, lesdites bandes souples 9 étant agencées sensiblement parallèlement les unes aux autres comme leur ensemble 6 d'éléments de retenue 36 respectif,
- une pluralité d'éléments de support identiques les uns aux autres et qui inclut ledit élément de support 10, lesdits éléments de support 10 étant disposés sensiblement parallèlement les uns aux autres, ladite conformation d'attache complémentaire de chacun desdits éléments de support 10 coopérant mécaniquement avec au moins la première conformation d'attache de l'un desdits éléments de retenue 36 pour fixer chaque élément de support 10 à l'un desdits éléments de retenue 36.

De préférence, ladite conformation d'attache complémentaire de chacun desdits éléments de support 10 coopère mécaniquement avec la première conformation d'attache de plusieurs éléments de retenus 36 afin de sécuriser d'avantage l'attachement de chacun des éléments de support 10 avec ladite toiture 3, 4, 5 ainsi que d'assurer une meilleure répartition des charges sur ladite toiture 3, 4, 5.

Selon une variante de réalisation, lesdits éléments de support 10 sont disposés sensiblement perpendiculairement à ladite pluralité de bandes souples 9 et donc à chaque ensemble 6 d'éléments de retenue 36, comme illustré par exemple aux figures 5 et 22. Selon une autre variante de réalisation illustrée à la figure 15, lesdits éléments de support 10 sont disposés sensiblement parallèlement à ladite pluralité de bandes souples 9 et donc à chaque ensemble 6 d'éléments de retenue 36.

De manière avantageuse, chacune desdites bandes souples 9 est soudée à ladite toiture 3, 4, 5, de part et d'autre de son ensemble 6 d'éléments de retenue 36 respectif, de préférence le long de ce dernier, par exemple selon au moins deux directions de soudure S (ou encore des lignes de soudure S). Dit autrement, l'assemblage pour la conversion du rayonnement solaire comprend au moins deux zones de soudure 21 de chacune des bandes souples 9 à ladite toiture 3, 4, 5, de part et d'autre de son ensemble 6 d'éléments de retenue 36 respectif, de préférence le long de ce dernier. Chaque zone de soudure 21 s'étend de préférence selon une direction de soudure S (ou encore ligne de soudure S) respective. Lesdites deux directions de soudure S (ou encore des lignes de soudure S) sont avantageusement sensiblement parallèles l'une à l'autre. Des zones de soudure 21 sont illustrées notamment aux figures 3 et 7.

L'invention concerne, selon un cinquième aspect, un procédé d'installation d'un système de fixation 1 d'au moins un panneau solaire 2 sur une toiture 3, 4, 5, incluant au moins :
- une étape d'agencement, lors de laquelle au moins un élément de retenue 36 est disposé sur la toiture 3, 4, 5, ledit élément de retenue 36 comprenant au moins :
   o une portion inférieure 7 disposée sur ladite toiture 3, 4, 5,
   o une première portion supérieure 8 ayant la forme d'un élément de plaque qui s'étend en saillie de ladite portion inférieure 7 entre un premier bord inférieur 29 solidaire de ladite portion inférieure 7 et un premier bord supérieur libre 14, ladite première portion supérieure 8 étant pourvue d'une première conformation d'attache,
- une étape d'assemblage, ayant lieu de préférence préalablement à ladite étape d'agencement, lors de laquelle une bande souple 9, vient coiffer ladite portion inférieure 7, ladite première portion supérieure 8 traversant ainsi la bande souple 9 afin de faire saillie de cette dernière,
- une étape primaire de fixation, lors de laquelle ladite bande souple 9 est attachée à ladite toiture 3, 4, 5, solidarisant ainsi ledit ensemble 6 d'éléments de retenue 36 à cette dernière,
- une étape secondaire de fixation, lors de laquelle un élément de support 10 comprenant une conformation d'attache complémentaire, est fixé audit élément de retenue 36 par coopération mécanique entre la première conformation d'attache et la conformation d'attache complémentaire, ledit élément de support 10 étant conçu pour recevoir ledit panneau solaire 2 afin de le fixer à ladite toiture 3, 4, 5.

Selon un premier mode de réalisation, lors de ladite étape secondaire d'agencement une portion pointue et/ou coupante 25 de ladite au moins une première portion supérieure 8 perfore la bande souple 9 et réalise ainsi un passage traversant 35 de ladite partie supérieure 8 à travers la bande souple 9.

Selon un second mode de réalisation, ladite bande souple 9 est munie d'au moins un passage traversant 35 et lors de ladite étape secondaire d'agencement ladite première portion supérieure 8 traverse ledit passage traversant 35 afin de faire saillie de la bande souple 9.

De manière avantageuse, lors de ladite étape primaire de fixation, ladite bande souple 9 est soudée à la toiture 3, 4, 5. Ladite bande souple 9 est avantageusement soudée à ladite toiture 3, 4, 5 de part et d'autre dudit élément de retenue 36, de préférence le long de ce dernier, par exemple selon au moins deux directions de soudure S (ou encore des lignes de soudure S), tel que mentionné précédemment. De manière encore plus avantageuse, la soudure s'effectue à l'aide d'une machine conçue pour se déplacer, par exemple par l'intermédiaire de roues, le long des lignes de soudure à réaliser S. Au cours de son déplacement, une première partie de la machine vient tout d'abord chauffer simultanément, grâce par exemple à des pistolets à air chaud, deux zones de la bande souple 9 et de la membrane d'étanchéité 3 situées de part et d'autre dudit élément de retenue 36, puis une seconde partie de la machine vient ensuite, par exemple grâce à des rouleaux, presser les zones ainsi chauffées pour les rendre solidaires. La machine ainsi décrite permet de réaliser deux lignes de soudures S continues par thermo-soudage, en plaçant simplement la machine en bout de ligne et en la faisant rouler jusqu'à l'autre extrémité. Avantageusement, la matière de la bande souple 9, est choisie pour permettre sa soudure sur la membrane d'étanchéité 3 sans ajout d'éléments additionnels. Cette façon de procéder est encore plus avantageuse lorsqu'un ensemble 6 d'éléments de retenue 36 tels que décrit ci-avant est présent, ledit ensemble 6 d'éléments de retenue étant alors solidarisé au toit très facilement.

Selon un mode de réalisation particulier, le procédé d'installation comprend en outre une étape tertiaire de fixation, lors de laquelle un composé adhésif 12 est déposé sur l'élément de support 10, ledit composé adhésif 12 étant conçu pour coller directement ledit panneau solaire 2 audit élément de support 10.

Il est aussi décrit, un procédé d'installation d'au moins un module de fixation 26 d'au moins un panneau solaire 2 sur une toiture 3, 4, 5 comprenant au moins :
- une étape d'agencement, lors de laquelle ledit module de fixation 26 est disposé sur la toiture 3, 4, 5, ledit module de fixation 26 étant conforme à celui décrit ci-avant ,
- une étape de fixation, lors de laquelle la bande souple 9 dudit module de fixation 26 est attachée à ladite toiture 3, 4, 5, par exemple par soudure, solidarisant ainsi ledit module de fixation 26 à cette dernière.

De manière avantageuse, l'étape de soudure décrite ici peut être réalisée de la même façon que l'étape de soudure décrite plus haut, c'est-à-dire grâce à une machine de thermo-soudage en continu.

L'invention concerne, selon un sixième aspect, un procédé de fabrication d'un système de fixation 1 d'au moins un panneau solaire 2 sur une toiture 3, 4, 5, ledit procédé incluant au moins :
- une étape primaire de fabrication ou de fourniture d'au moins un élément de retenue 36 qui comprend au moins :
   o une portion inférieure 7 destinée à être disposée sur ladite toiture 3, 4, 5,
   o une première portion supérieure 8 ayant la forme d'un élément de plaque qui s'étend en saillie à partir de ladite portion inférieure 7 entre un premier bord inférieur solidaire 29 de ladite portion inférieure 7 et un premier bord supérieur libre 14, ladite première portion supérieure 8 étant pourvue d'une première conformation d'attache,
- une étape secondaire de fabrication ou de fourniture d'une bande souple 9 munie d'au moins un passage traversant 35, ladite bande souple 9 étant conçue pour coiffer ladite portion inférieure 7 afin que ladite première portion supérieure 8 traverse ledit passage traversant 35 pour faire saillie de la bande souple 9, ladite bande souple 9 étant conçue pour être attachée à ladite toiture 3, 4, 5 afin de solidariser ledit élément de retenue 36 à ladite toiture 3, 4, 5,
- une étape tertiaire de fabrication ou de fourniture d'un élément de support 10 conçu pour recevoir ledit panneau solaire 2 afin de le fixer à ladite toiture 3, 4, 5, ledit élément de support 10 comprenant une conformation d'attache complémentaire conçue pour coopérer mécaniquement avec la première conformation d'attache pour fixer ledit élément de support 10 audit élément de retenue 36.

De manière avantageuse, l'étape primaire de fabrication ou de fourniture inclut au moins une étape de découpe et/ou de pliage d'un flan (en d'autres termes d'une préforme, d'une ébauche) de préférence métallique, pour former au moins ladite portion inférieure 7 et ladite première portion supérieure 8. Une telle mise en œuvre est particulièrement rapide, facile et bon marché. De préférence, lorsque ledit élément de retenue 36 comprend une deuxième portion supérieure 30, celle-ci est aussi formée lors de ladite étape primaire de fabrication ou de fourniture.

Selon un mode de réalisation préférentiel, l'étape primaire de fabrication ou de fourniture inclut au moins :
- une étape de découpe dudit flan, pour obtenir un flan intermédiaire ayant la même forme que ledit élément de retenue 36 mais étant entièrement plan,
- une étape de pliage dudit flan intermédiaire pour former ladite portion inférieure 7 et ladite première portion supérieure 8 (et éventuellement ladite deuxième portion supérieure 30).

Une telle mise en œuvre permet d'obtenir l'élément de retenue 36 de manière particulièrement rapide, facile et à coûts réduits.

Selon un autre mode de réalisation, l'étape primaire de fabrication ou de fourniture inclut au moins :
- une étape de découpe dudit flan, pour obtenir un flan intermédiaire comprenant :
   o un élément de flan intermédiaire interne,
   o un élément de flan intermédiaire externe entourant ledit élément de flan intermédiaire interne,
   o une portion de liaison reliant lesdits flan intermédiaire interne et flan intermédiaire externe,
- une étape de pliage de ladite portion de liaison, pour former au moins :
   o ladite première portion supérieure 8, laquelle comprend donc au moins ledit élément de flan intermédiaire interne,
   o ladite portion inférieure 7, laquelle comprend donc au moins ledit élément de flan intermédiaire externe.

A la suite de l'étape de découpe, puis de l'étape de pliage, l'élément de flan intermédiaire externe présente alors avantageusement une portion interne vide 22. Avant ladite étape de pliage, l'élément de flan intermédiaire interne était situé au sein de ladite portion interne vide 22. Des portions internes vides 22 sont illustrés notamment aux figures 1, 2, 7 et 9. Bien entendu, après l'étape de découpe et l'étape de pliage, ledit élément de retenue 36 est avantageusement formé.

Selon un mode de réalisation avantageux, l'étape tertiaire de fabrication ou de fourniture inclut au moins :
- une fabrication ou fourniture d'un élément de tôle ou d'un élément profilé, sensiblement allongé selon une direction d'extension longitudinale,
- un pliage dudit élément de tôle ou dudit élément profilé selon une direction de pliage sensiblement parallèle ou sensiblement confondue avec ladite direction d'extension longitudinale.

Une telle mise en œuvre permet d'obtenir l'élément de support 10 de manière particulièrement rapide, facile et à coûts réduits.

Toute combinaison des différentes variantes et exemples susmentionnés est bien évidemment possible, au regard de ce qu'il semble pertinent dans le domaine technique concerné pour réaliser un système de fixation 1 selon l'invention, ou un autre des aspects de l'invention mentionnés ci-avant.

## Revendications

1. Système de fixation (1) d'au moins un panneau solaire (2) sur une toiture (3, 4, 5), incluant au moins :
- un élément de retenue (36) qui comprend au moins :
∘ une portion inférieure (7) destinée à être disposée sur ladite toiture (3, 4, 5),
∘ une première portion supérieure (8) ayant la forme d'un élément de plaque qui s'étend en saillie à partir de ladite portion inférieure (7) entre un premier bord inférieur (29) solidaire de ladite portion inférieure (7) et un premier bord supérieur libre (14), ladite première portion supérieure (8) étant pourvue d'une première conformation d'attache,
- une bande souple (9) conçue pour coiffer ladite portion inférieure (7) afin que ladite première portion supérieure (8) traverse ladite bande souple (9) pour faire saillie de cette dernière, ladite bande souple (9) étant conçue pour être attachée à ladite toiture (3, 4, 5) afin de solidariser ledit élément de retenue (36) à ladite toiture (3, 4, 5),
- un élément de support (10) conçu pour recevoir ledit panneau solaire (2) afin de le fixer à ladite toiture (3, 4, 5), ledit élément de support (10) comprenant une conformation d'attache complémentaire conçue pour coopérer mécaniquement avec la première conformation d'attache pour fixer ledit élément de support (10) audit élément de retenue (36).

2. Système de fixation (1) selon la revendication précédente, **caractérisé en ce que** ladite première portion supérieure (8) est venue de matière avec ladite portion inférieure (7).

3. Système de fixation (1) selon l'une quelconque des revendications précédentes, **caractérisé en ce que** ladite bande souple (9) est munie d'au moins un passage traversant (35), ladite première portion supérieure (8) étant conçue pour traverser ledit passage traversant (35).

4. Système de fixation (1) selon l'une quelconque des revendications précédentes, **caractérisé en ce que** ledit élément de retenue (36) comprend au moins une deuxième portion supérieure (30) ayant la forme d'un élément de plaque qui s'étend en saillie à partir de ladite portion inférieure (7) entre un deuxième bord inférieur (31) solidaire de ladite portion inférieure (7) et un deuxième bord supérieur libre (32), ladite deuxième portion supérieure (30) étant pourvue d'une deuxième conformation d'attache, ladite bande souple (9) étant conçue en outre pour coiffer ladite portion inférieure (7) afin que ladite deuxième portion supérieure (30) traverse ladite bande souple (9) pour faire saillie de cette dernière, ladite conformation d'attache complémentaire étant conçue en outre pour coopérer mécaniquement avec ladite deuxième conformation d'attache pour fixer ledit élément de support (10) audit élément de retenue (36), chacune desdites première et deuxième portions supérieures (8) formant de préférence un angle saillant compris entre 45° et 135° avec ladite portion inférieure (7), ladite portion inférieure (7) étant de préférence sensiblement plate.

5. Système de fixation (1) selon l'une quelconque des revendications précédentes, **caractérisé en ce que** ladite première portion supérieure (8) comprend elle-même une tête (13) et un pied (16) relié à ladite tête (13), ladite tête (13) débordant latéralement dudit pied (16) pour former un rebord de butée (15) contribuant à former ladite première conformation d'attache,
et **en ce que** ledit élément de support (10) délimite une cavité interne (11) et comprend des parois inférieures (17) qui délimitent une lumière (18) permettant à la cavité interne (11) de déboucher à l'extérieur de l'élément de support (10), ladite cavité interne (11) étant conçue pour accueillir ladite tête (13), ladite lumière (18) étant conçue pour être traversée par ledit pied (16), lesdites parois inférieures (17) étant conçues pour être disposées au droit et en-dessous dudit rebord de butée (15) afin d'entrer en butée avec ladite tête (13), lesdites parois inférieures (17) constituant au moins en partie ladite conformation d'attache complémentaire.

6. Système de fixation (1) selon l'une quelconque des revendications précédentes, **caractérisé en ce qu'**il comprend un ensemble (6) d'éléments de retenue (36) destinés à être disposés en lignes les uns à la suite des autres, ladite bande souple (9) étant en outre conçue pour coiffer la portion inférieure (7) de chacun desdits éléments de retenue (36) afin que la première portion supérieure (8) de chacun des éléments de retenue (36) traverse ladite bande souple (9) pour faire saillie de cette dernière, ladite bande souple (9) étant conçue pour être attachée à ladite toiture (3, 4, 5) afin de solidariser ledit ensemble (6) d'éléments de retenue (36) à ladite toiture (3, 4, 5).

7. Module de fixation (26) d'au moins un panneau solaire (2) sur une toiture (3, 4, 5) incluant au moins :
- un élément de retenue (36) qui comprend au moins :
∘ une portion inférieure (7) destinée à être disposée sur ladite toiture (3, 4, 5),
∘ une première portion supérieure (8) ayant la forme d'un élément de plaque qui s'étend en saillie à partir de ladite portion inférieure (7) entre un premier bord inférieur (29) solidaire de ladite portion inférieure (7) et un premier bord supérieur libre (14), ladite première portion supérieure (8) étant pourvue d'une première conformation d'attache,
- une bande souple (9) présentant une face inférieure (33) et une face supérieure (34), et qui est conçue pour être attachée à ladite toiture (3, 4, 5) afin de solidariser ledit élément de retenue (36) à ladite toiture (3, 4, 5), ladite bande souple (9) coiffant ladite portion inférieure (7) pour que ladite face inférieure (33) s'étende contre ladite portion inférieure (7) tandis que ladite première portion supérieure (8) traverse ladite bande souple (9) pour faire saillie de ladite face supérieure (34).

8. Equipement pour la conversion du rayonnement solaire en énergie électrique ou thermique, incluant au moins :
- un panneau solaire (2), de préférence souple, et
- un système de fixation (1) dudit panneau solaire (2) sur une toiture (3, 4, 5), conforme à l'une quelconque des revendications 1 à 6.

9. Assemblage de conversion du rayonnement solaire en énergie électrique ou thermique, incluant au moins un panneau solaire (2) et un système de fixation (1) selon l'une quelconque des revendications 1 à 6, ladite portion inférieure (7) étant disposée sur ladite toiture (3, 4, 5), ladite bande souple (9) coiffant ladite portion inférieure (7) et ladite première portion supérieure (8) traversant ledit passage traversant (35) pour faire saillie de la bande souple (9), ladite bande souple (9) étant attachée à ladite toiture (3, 4, 5), solidarisant ainsi ledit élément de retenue (36) à ladite toiture (3, 4, 5), ledit panneau solaire (2) étant fixé audit élément de support (10), ladite conformation d'attache complémentaire coopérant mécaniquement avec la première conformation d'attache pour fixer ledit élément de support (10) audit élément de retenue (36).

10. Assemblage de conversion du rayonnement solaire en énergie électrique ou thermique selon la revendication précédente et la revendication 6, **caractérisé en ce que** ledit système de fixation (1) comprend :
- une pluralité d'ensembles d'éléments de retenue identiques les uns aux autres et qui inclut ledit ensemble (6) d'éléments de retenue (36), lesdits ensembles (6) d'éléments de retenue (36) étant disposés sensiblement parallèlement les uns aux autres,
- une pluralité de bandes souples identiques les unes aux autres et qui inclut ladite bande souple (9), chaque bande souple (9) coiffant la portion inférieure (7) de chacun desdits éléments de retenue (36) d'un ensemble (6) d'éléments de retenue (36), ladite première portion supérieure (8) de chacun desdits éléments de retenue (36) dudit ensemble (6) d'éléments de retenue (36) traversant ladite bande souple (9) pour faire saillie de cette dernière,
- une pluralité d'éléments de support identiques les uns aux autres et qui inclut ledit élément de support (10), lesdits éléments de support (10) étant disposés sensiblement parallèlement les uns aux autres, de préférence sensiblement perpendiculairement à ladite pluralité de bandes souples (9), ladite conformation d'attache complémentaire de chacun desdits éléments de support (10) coopérant mécaniquement avec au moins la première conformation d'attache de l'un desdits éléments de retenue (36) pour fixer chaque élément de support (10) à l'un desdits éléments de retenue (36).

11. Procédé d'installation d'un système de fixation (1) d'au moins un panneau solaire (2) sur une toiture (3, 4, 5), incluant au moins :
- une étape d'agencement, lors de laquelle au moins un élément de retenue (36) est disposé sur la toiture (3, 4, 5), ledit élément de retenue (36) comprenant au moins :
∘ une portion inférieure (7) disposée sur ladite toiture (3, 4, 5),
∘ une première portion supérieure (8) ayant la forme d'un élément de plaque qui s'étend en saillie de ladite portion inférieure (7) entre un premier bord inférieur (29) solidaire de ladite portion inférieure (7) et un premier bord supérieur libre (14), ladite première portion supérieure (8) étant pourvue d'une première conformation d'attache,
- une étape d'assemblage, ayant lieu de préférence préalablement à ladite étape d'agencement, lors de laquelle une bande souple (9), vient coiffer ladite portion inférieure (7), ladite première portion supérieure (8) traversant ainsi la bande souple (9) afin de faire saillie de cette dernière,
- une étape primaire de fixation, lors de laquelle ladite bande souple (9) est attachée à ladite toiture (3, 4, 5), solidarisant ainsi ledit élément de retenue (36) à ladite toiture (3, 4, 5),
- une étape secondaire de fixation, lors de laquelle un élément de support (10), comprenant une conformation d'attache complémentaire, est fixé audit élément de retenue (36) par coopération mécanique entre la première conformation d'attache et la conformation d'attache complémentaire, ledit élément de support (10) étant conçu pour recevoir ledit panneau solaire (2) afin de le fixer à ladite toiture (3, 4, 5).

12. Procédé d'installation d'un système de fixation (1) selon la revendication précédente, **caractérisé en ce que** lors de ladite étape primaire de fixation, ladite bande souple (9) est soudée à la toiture (3, 4, 5), de part et d'autre dudit élément de retenue (36), de préférence le long de dudit élément de retenue (36).

13. Procédé d'installation d'un système de fixation (1) selon la revendication 11 ou 12, **caractérisé en ce que** ce qu'il comprend en outre une étape tertiaire de fixation, lors de laquelle un composé adhésif (12) est déposé sur l'élément de support (10), ledit composé adhésif (12) étant conçu pour coller directement ledit panneau solaire (2) audit élément de support (10).

14. Procédé de fabrication d'un système de fixation (1) d'au moins un panneau solaire (2) sur une toiture (3, 4, 5), ledit procédé incluant au moins :
- une étape primaire de fabrication ou de fourniture d'au moins un élément de retenue (36) qui comprend au moins :
o une portion inférieure (7) destinée à être disposée sur ladite toiture (3, 4, 5),
o une première portion supérieure (8) ayant la forme d'un élément de plaque qui s'étend en saillie à partir de ladite portion inférieure (7) entre un premier bord inférieur solidaire (29) de ladite portion inférieure (7) et un premier bord supérieur libre (14), ladite première portion supérieure (8) étant pourvue d'une première conformation d'attache,
- une étape secondaire de fabrication ou de fourniture d'une bande souple (9) munie d'au moins un passage traversant (35), ladite bande souple (9) étant conçue pour coiffer ladite portion inférieure (7) afin que ladite première portion supérieure (8) traverse ledit passage traversant (35) pour faire saillie de la bande souple (9), ladite bande souple (9) étant conçue pour être attachée à ladite toiture (3, 4, 5) afin de solidariser ledit élément de retenue (36) à ladite toiture (3, 4, 5),
- une étape tertiaire de fabrication ou de fourniture d'un élément de support (10) conçu pour recevoir ledit panneau solaire (2) afin de le fixer à ladite toiture (3, 4, 5), ledit élément de support (10) comprenant une conformation d'attache complémentaire conçue pour coopérer mécaniquement avec la première conformation d'attache pour fixer ledit élément de support (10) audit élément de retenue (36).

15. Procédé de fabrication d'un système de fixation (1) selon la revendication précédente, **caractérisé en ce que** l'étape primaire de fabrication ou de fourniture inclut au moins une étape de découpe et/ou de pliage d'un flan métallique, pour former au moins ladite portion inférieure (7) et ladite première portion supérieure (8).
